(19)

Europäisches
Patentamt
European
Patent Office
Office européen
des brevets

(11) **EP 3 780 411 A1**

(12) **EUROPEAN PATENT APPLICATION**

(43) Date of publication:
**17.02.2021 Bulletin 2021/07**

(51) Int Cl.:
**H04B 7/0456** (2017.01)   **H04B 7/06** (2006.01)

(21) Application number: **19191849.9**

(22) Date of filing: **14.08.2019**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FRAUNHOFER-GESELLSCHAFT zur
Förderung
der angewandten Forschung e.V.
80686 München (DE)**

(72) Inventors:
• **GROSSMANN, Marcus**
 **91058 Erlangen (DE)**
• **RAMIREDDY, Venkatesh**
 **91058 Erlangen (DE)**
• **LANDMANN, Markus**
 **91058 Erlangen (DE)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **PRECODER MATRIX INDICATION AND CODEBOOK STRUCTURE FOR PRECODING FOR
FREQUENCY SELECTIVE MIMO CHANNELS**

(57)    A communication device for performing in a wireless communication system a transmission to a network entity, like a base station or another communication device of the wireless communication system. The communication device receives from the network entity of the wireless communication system a precoding matrix indicator indicating a precoder matrix for one or more transmission layers and transmission resources, like time domain resources and/or frequency-domain resources, of a transmission channel (PUSCH, PSSCH) to the network entity. The communication device includes a precoder, wherein the precoder is to precode, responsive to the received precoding matrix indicator, time domain resources and/or frequency-domain resources of the transmission channel (PUSCH, PSSCH) to the network entity over one or more ports of the communication device. The communication device performs the transmission to the network entity using the precoded time domain resources and/or frequency-domain resources of the transmission channel (PUSCH, PSSCH) over the one or more ports. The precoder is based on one or more codebooks and a plurality of combining coefficients for complex combining components from the one or more codebooks, the one or more codebooks including one or more of:
• a spatial codebook comprising one or more spatial beam or port selection components of the precoder, and/or
• a delay codebook comprising one or more delay components of the precoder, and/or
• a Doppler-frequency codebook comprising one or more Doppler-frequency components of the precoder.

EP 3 780 411 A1

**EP 3 780 411 A1**

## Description

The present application concerns the field of wireless communications, more specifically to uplink MIMO precoding and a codebook structure for beam, delay- and/or Doppler-based precoding in a wireless communication system.

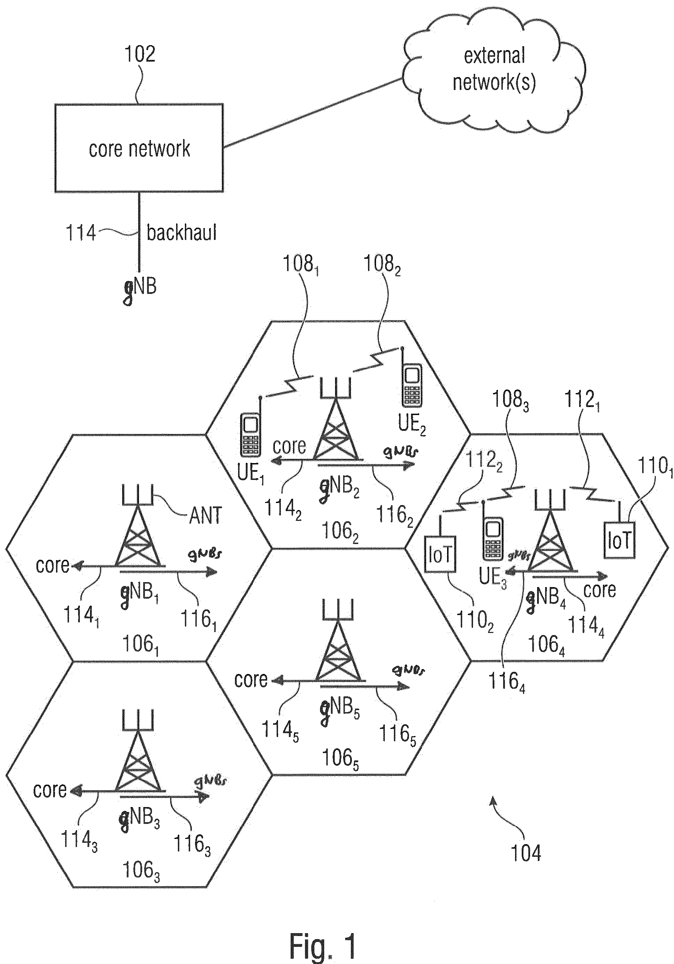

Fig. 1 is a schematic representation of an example of a terrestrial wireless network 100 including a core network 102 and a radio access network 104. The radio access network 104 may include a plurality of base stations $gNB_1$ to $gNB_5$, each serving a specific area surrounding the base station schematically represented by respective cells $106_1$ to $106_5$. The base stations are provided to serve users within a cell. The term base station, BS, refers to a gNB in 5G networks, eNB in UMTS/LTE/LTE-A/ LTE-A Pro, or just BS in other mobile communication standards. A user may be a stationary device or a mobile device. Further, the wireless communication system may be accessed by mobile or stationary IoT devices which connect to a base station or to a user. The mobile devices or the IoT devices may include physical devices, ground based vehicles, such as robots or cars, aerial vehicles, such as manned or unmanned aerial vehicles (UAVs), the latter also referred to as drones, buildings and other items or devices having embedded therein electronics, software, sensors, actuators, or the like as well as network connectivity that enables these devices to collect and exchange data across an existing network infrastructure. Fig. 1 shows an exemplary view of only five cells, however, the wireless communication system may include more such cells. Fig. 1 shows two users $UE_1$ and $UE_2$, also referred to as user equipment, UE, that are in cell $106_2$ and that are served by base station $gNB_2$. Another user $UE_3$ is shown in cell $106_4$ which is served by base station $gNB_4$. The arrows $108_1$, $108_2$ and $108_3$ schematically represent uplink/downlink connections for transmitting data from a user $UE_1$, $UE_2$ and $UE_3$ to the base stations $gNB_2$, $gNB_4$ or for transmitting data from the base stations $gNB_2$, $gNB_4$ to the users $UE_1$, $UE_2$, $UE_3$. Further, Fig. 1 shows two IoT devices $110_1$ and $110_2$ in cell $106_4$, which may be stationary or mobile devices. The IoT device $110_1$ accesses the wireless communication system via the base station $gNB_4$ to receive and transmit data as schematically represented by arrow $112_1$. The IoT device $110_2$ accesses the wireless communication system via the user $UE_3$ as is schematically represented by arrow $112_2$. The respective base station $gNB_1$ to $gNB_5$ may be connected to the core network 102, e.g. via the S1 interface, via respective backhaul links $114_1$ to $114_5$, which are schematically represented in Fig. 1 by the arrows pointing to "core". The core network 102 may be connected to one or more external networks. Further, some or all of the respective base station $gNB_1$ to $gNB_5$ may connected, e.g. via the S1 or X2 interface or XN interface in NR, with each other via respective backhaul links $116_1$ to $116_5$, which are schematically represented in Fig. 1 by the arrows pointing to "gNBs".

For data transmission a physical resource grid may be used. The physical resource grid may comprise a set of resource elements to which various physical channels and physical signals are mapped. For example, the physical channels may include the physical downlink, uplink and/or sidelink, SL, shared channels (PDSCH, PUSCH, PSSCH) carrying user specific data, also referred to as downlink, uplink or sidelink payload data, the physical broadcast channel (PBCH) carrying for example a master information block (MIB) and a system information block (SIB), the physical downlink, uplink and/or sidelink control channels (PDCCH, PUCCH, PSCCH) carrying for example the downlink control information (DCI), the uplink control information (UCI) or the sidelink control information (SCI). For the uplink, the physical channels may further include the physical random access channel (PRACH or RACH) used by UEs for accessing the network once a UE is synchronized and obtains the MIB and SIB. The physical signals may comprise reference signals or symbols (RS), synchronization signals and the like. The resource grid may comprise a frame or radio frame having a certain duration, like 10 milliseconds, in the time domain and having a given bandwidth in the frequency domain. The frame may have a certain number of subframes of a predefined length, e.g., 2 subframes with a length of 1 millisecond. Each subframe may include two slots of 6 or 7 OFDM symbols depending on the cyclic prefix (CP) length. A frame may also consist of a smaller number of OFDM symbols, e.g. when utilizing shortened transmission time intervals (sTTI) or a mini-slot/non-slot-based frame structure comprising just a few OFDM symbols.

The wireless communication system may be any single-tone or multicarrier system using frequency-division multiplexing, like the orthogonal frequency-division multiplexing (OFDM) system, the orthogonal frequency-division multiple access (OFDMA) system, or any other IFFT-based signal with or without CP, e.g. DFT-s-OFDM. Other waveforms, like non-orthogonal waveforms for multiple access, e.g. filter-bank multicarrier (FBMC), generalized frequency division multiplexing (GFDM) or universal filtered multi carrier (UFMC), may be used. The wireless communication system may operate, e.g., in accordance with the LTE-Advanced pro standard or the 5G or NR, New Radio, standard.

The wireless network or communication system depicted in Fig. 1 may by a heterogeneous network having two distinct overlaid networks, a network of macro cells with each macro cell including a macro base station, like base station $gNB_1$ to $gNB_5$, and a network of small cell base stations (not shown in Fig. 1), like femto- or pico-base stations. In addition to the above described terrestrial wireless network also non-terrestrial wireless communication networks exist including spaceborne transceivers, like satellites, and/or airborne transceivers, like unmanned aircraft systems. The non-terrestrial wireless communication network or system may operate in a similar way as the terrestrial system described above with reference to Fig. 1, for example in accordance with the LTE-advanced pro standard or the 5G or NR, new radio, standard.

In a wireless communication system like to one depicted schematically in Fig. 1, multi-antenna techniques may

2

be used, e.g., in accordance with LTE or NR, to improve user data rates, link reliability, cell coverage and network capacity. To support multi-stream or multi-layer transmissions, linear precoding is used in the physical layer of the communication system. Linear precoding is performed by a precoder matrix which maps layers of data to antenna ports. The precoding may be seen as a generalization of beamforming, which is a technique to spatially direct or focus a data transmission towards an intended receiver. The precoder matrix to be used at the gNB to map the data to the transmit antenna ports is decided using channel state information, CSI.

In a wireless communication system as described above, such as LTE or New Radio (5G), downlink signals convey data signals, control signals containing downlink, DL, control information (DCI), and a number of reference signals or symbols (RS) used for different purposes. A gNodeB (or gNB or base station) transmits data and control information (DCI) through the so-called physical downlink shared channel (PDSCH) and physical downlink control channel (PDCCH) or enhanced PDCCH (ePDCCH), respectively. Moreover, the downlink signal(s) of the gNB may contain one or multiple types of RSs including a common RS (CRS) in LTE, a channel state information RS (CSI-RS), a demodulation RS (DM-RS), and a phase tracking RS (PT-RS). The CRS is transmitted over a DL system bandwidth part and used at the user equipment (UE) to obtain a channel estimate to demodulate the data or control information. The CSI-RS is transmitted with a reduced density in the time and frequency domain compared to CRS and used at the UE for channel estimation/channel state information (CSI) acquisition. The DM-RS is transmitted only in a bandwidth part of the respective PDSCH and used by the UE for data demodulation. For signal precoding at the gNB, several CSI-RS reporting mechanisms are used such as non-precoded CSI-RS and beamformed CSI-RS reporting (see reference [1]). For a non-precoded CSI-RS, a one-to-one mapping between a CSI-RS port and a transceiver unit, TXRU, of the antenna array at the gNB is utilized. Therefore, non-precoded CSI-RS provides a cell-wide coverage where the different CSI-RS ports have the same beam-direction and beam-width. For beamformed/precoded UE-specific or non-UE-specific CSI-RS, a beam-forming operation is applied over a single- or multiple antenna ports to have several narrow beams with high gain in different directions and therefore, no cell-wide coverage.

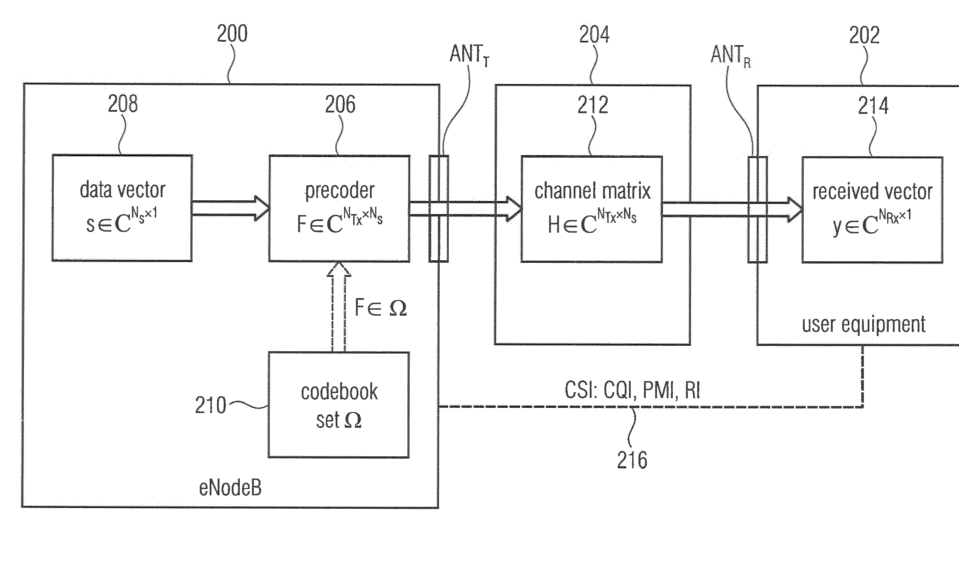

In a wireless communication system employing time division duplexing, TDD, due to channel reciprocity, the channel state information (CSI) is available at the base station (gNB). However, when employing frequency division duplexing, FDD, due to the absence of channel reciprocity, the channel is estimated at the UE and the estimate is fed back to the gNB. Fig. 2 shows a block-based model of a MIMO DL transmission using codebook-based-precoding in accordance with LTE release 8. Fig. 2 shows schematically the base station 200, gNB, the user equipment, UE, 202 and the channel 204, like a radio channel for a wireless data communication between the base station 200 and the user equipment 202. The base station includes an antenna array $ANT_T$ having a plurality of antennas or antenna elements, and a precoder 206 receiving a data vector 208 and a precoder matrix F from a codebook 210. The channel 204 may be described by the channel tensor/matrix 212. The user equipment 202 receives the data vector 214 via an antenna or an antenna array $ANT_R$ having a plurality of antennas or antenna elements. A feedback channel 216 between the user equipment 202 and the base station 200 is provided for transmitting feedback information. The previous releases of 3GPP up to Rel.15 support the use of several downlink reference symbols (such as CSI-RS) for CSI estimation at the UE.

In FDD systems (up to Rel. 15), the estimated channel at the UE is reported to the gNB implicitly where the CSI report transmitted by the UE over the feedback channel includes the rank index (RI), the precoding matrix index (PMI) and the channel quality index (CQI) (and the CRI from Rel. 13) allowing, at the gNB, deciding the precoding matrix, and the modulation order and coding scheme (MCS) of the symbols to be transmitted. The PMI and the RI are used to determine the precoding matrix from a predefined set of matrices $\Omega$ called 'codebook'. The codebook, e.g., in accordance with LTE, may be a look-up table with matrices in each entry of the table, and the PMI and RI from the UE decide from which row and column of the table the precoder matrix to be used is obtained. The precoders and codebooks are designed up to Rel. 15 for gNBs equipped with one-dimensional Uniform Linear Arrays (ULAs) having $N_1$ dual-polarized antennas (in total $N_t = 2N_1$ antennas), or with two-dimensional Uniform Planar Arrays (UPAs) having dual-polarized antennas at $N_1 N_2$ positions (in total $N_t = 2N_1 N_2$ antennas). The ULA allows controlling the radio wave in the horizontal (azimuth) direction only, so that azimuth-only beamforming at the gNB is possible, whereas the UPA supports transmit beamforming on both vertical (elevation) and horizontal (azimuth) directions, which is also referred to as full-dimension (FD) MIMO. The codebook, e.g., in the case of massive antenna arrays such as FD-MIMO, may be a set of beamforming weights that forms spatially separated electromagnetic transmit/receive beams using the array response vectors of the array. The beamforming weights (also referred to as the 'array steering vectors') of the array are amplitude gains and phase adjustments that are applied to the signal fed to the antennas (or the signal received from the antennas) to transmit (or obtain) a radiation towards (or from) a particular direction. The components of the precoder matrix are obtained from the codebook, and the PMI and the RI are used to 'read' the codebook and obtain the precoder.

The 3GPP Release 15 NR specification supports uplink multiple-input-multiple-output (MIMO) precoding with up to four data layers. The communication device (user equipment) may be configured with two different transmission modes for the physical uplink shared channel (PUSCH) multi-antenna precoding, namely, codebook-based and non-codebook-based transmission. The usage of one of these schemes depends on the uplink and downlink channel conditions and on the assumptions of the uplink/downlink channel reciprocity. Here, uplink/downlink channel reciprocity means that some kind of uplink channel conditions may be assumed by the communication device based on downlink channel measurements.

In non-codebook-based NR uplink precoding channel reciprocity is assumed at the communication device. This means, based on downlink measurements on a set of configured reference signals transmitted by the base station, the communication device calculates a possible uplink MIMO precoder for the PUSCH transmission. The base station may then select from the pre-calculated precoder by the communication device a subset of the precoder columns (i.e., precoder layers) for precoding of the time and frequency resources of the uplink scheduling grant. To do this, the communication device precodes a set of configured Sounding Reference Signal, SRS resources, where each SRS resource comprises a single SRS port, using the determined precoder by the communication device. Here, each precoded SRS resource is associated with a column (i.e., layer) of the precoder. Based on uplink measurements on the SRS resources transmitted by the communication device, the base station may then decide on the rank of the transmission, and may select a subset of the SRS resources, and hence a subset of precoder columns (i.e., layers) for the PUSCH transmission. The selected SRS resources are indicated to the communication device via an SRS resource indicator (SRI) contained in a downlink channel indicator (DCI) that indicates an uplink scheduling grant. The communication device uses the indicated SRS resources, i.e., precoder columns, for the scheduled PUSCH transmission.

In contrast to non-codebook-based transmission, codebook-based transmission does not rely on uplink/downlink channel reciprocity and is based on a direct indication of the uplink transmission rank and precoder matrix to be used for a scheduled uplink grant. For codebook-based transmission, the communication device is configured with one or more SRS resources, where each SRS resource contains multiple SRS ports. Based on uplink measurements on the received SRS resources, the base station determines a suitable SRS resource (i.e., transmit beam), uplink transmission rank and precoder matrix selected from an uplink codebook. Table 1 and table 2 illustrate the 3GPP Rel. 15 uplink codebook (see reference [1]) in the case of a two antenna port-based single-layer and two-layer uplink transmissions, respectively. Tables 3-6 illustrate the 3GPP Rel. 15 uplink codebook (see reference [1]) for single-layer, two layer, three-layer, and four-layer four antenna-port uplink transmissions, respectively.

Table 1: Precoding matrix $W$ for single-layer transmission using two antenna ports (see reference [1])

| TPMI index | $W$ (ordered from left to right in increasing order of TPMI index) | | | | | | | |
|---|---|---|---|---|---|---|---|---|
| 0 - 5 | $\frac{1}{\sqrt{2}}\begin{bmatrix}1\\0\end{bmatrix}$ | $\frac{1}{\sqrt{2}}\begin{bmatrix}0\\1\end{bmatrix}$ | $\frac{1}{\sqrt{2}}\begin{bmatrix}1\\1\end{bmatrix}$ | $\frac{1}{\sqrt{2}}\begin{bmatrix}1\\-1\end{bmatrix}$ | $\frac{1}{\sqrt{2}}\begin{bmatrix}1\\j\end{bmatrix}$ | $\frac{1}{\sqrt{2}}\begin{bmatrix}1\\-j\end{bmatrix}$ | - | - |

Table 2: Precoding matrix $W$ for two-layer transmission using two antenna ports (see reference [1])

| TPMI index | $W$ (ordered from left to right in increasing order of TPMI index) | | |
|---|---|---|---|
| 0 - 2 | $\frac{1}{\sqrt{2}}\begin{bmatrix}1 & 0\\0 & 1\end{bmatrix}$ | $\frac{1}{\sqrt{2}}\begin{bmatrix}1 & 1\\1 & -1\end{bmatrix}$ | $\frac{1}{2}\begin{bmatrix}1 & 1\\j & -j\end{bmatrix}$ |

Table 3: Precoding matrix $W$ for single-layer transmission using four antenna ports (see reference [1])

| TPMI index | $W$ (ordered from left to right in increasing order of TPMI index) | | | | | | | |
|---|---|---|---|---|---|---|---|---|
| 0 - 7 | $\frac{1}{2}\begin{bmatrix}1\\0\\0\\0\end{bmatrix}$ | $\frac{1}{2}\begin{bmatrix}0\\1\\0\\0\end{bmatrix}$ | $\frac{1}{2}\begin{bmatrix}0\\0\\1\\0\end{bmatrix}$ | $\frac{1}{2}\begin{bmatrix}0\\0\\0\\1\end{bmatrix}$ | $\frac{1}{2}\begin{bmatrix}1\\0\\1\\0\end{bmatrix}$ | $\frac{1}{2}\begin{bmatrix}1\\0\\-1\\0\end{bmatrix}$ | $\frac{1}{2}\begin{bmatrix}1\\0\\j\\0\end{bmatrix}$ | $\frac{1}{2}\begin{bmatrix}1\\0\\-j\\0\end{bmatrix}$ |
| 8 - 15 | $\frac{1}{2}\begin{bmatrix}0\\1\\0\\1\end{bmatrix}$ | $\frac{1}{2}\begin{bmatrix}0\\1\\0\\-1\end{bmatrix}$ | $\frac{1}{2}\begin{bmatrix}0\\1\\0\\j\end{bmatrix}$ | $\frac{1}{2}\begin{bmatrix}0\\1\\0\\-j\end{bmatrix}$ | $\frac{1}{2}\begin{bmatrix}1\\1\\1\\1\end{bmatrix}$ | $\frac{1}{2}\begin{bmatrix}1\\1\\j\\j\end{bmatrix}$ | $\frac{1}{2}\begin{bmatrix}1\\1\\-1\\-1\end{bmatrix}$ | $\frac{1}{2}\begin{bmatrix}1\\1\\-j\\-j\end{bmatrix}$ |

(continued)

| TPMI index | W (ordered from left to right in increasing order of TPMI index) | | | | | | | |
|---|---|---|---|---|---|---|---|---|
| 16 - 23 | $\frac{1}{2}\begin{bmatrix}1\\j\\1\\j\end{bmatrix}$ | $\frac{1}{2}\begin{bmatrix}1\\j\\j\\-1\end{bmatrix}$ | $\frac{1}{2}\begin{bmatrix}1\\j\\-1\\-j\end{bmatrix}$ | $\frac{1}{2}\begin{bmatrix}1\\j\\-j\\1\end{bmatrix}$ | $\frac{1}{2}\begin{bmatrix}1\\-1\\1\\-1\end{bmatrix}$ | $\frac{1}{2}\begin{bmatrix}1\\-1\\j\\-j\end{bmatrix}$ | $\frac{1}{2}\begin{bmatrix}1\\-1\\-1\\1\end{bmatrix}$ | $\frac{1}{2}\begin{bmatrix}1\\-1\\-j\\j\end{bmatrix}$ |
| 24 - 27 | $\frac{1}{2}\begin{bmatrix}1\\-j\\1\\-j\end{bmatrix}$ | $\frac{1}{2}\begin{bmatrix}1\\-j\\j\\1\end{bmatrix}$ | $\frac{1}{2}\begin{bmatrix}1\\-j\\-1\\j\end{bmatrix}$ | $\frac{1}{2}\begin{bmatrix}1\\-j\\-j\\-1\end{bmatrix}$ | - | - | - | - |

Table 4: Precoding matrix **W** for two-layer transmission using four antenna ports (see reference [1])

| TPMI index | W (ordered from left to right in increasing order of TPMI index) | | | |
|---|---|---|---|---|
| 0 - 3 | $\frac{1}{2}\begin{bmatrix}1&0\\0&1\\0&0\\0&0\end{bmatrix}$ | $\frac{1}{2}\begin{bmatrix}1&0\\0&0\\0&1\\0&0\end{bmatrix}$ | $\frac{1}{2}\begin{bmatrix}1&0\\0&0\\0&0\\0&1\end{bmatrix}$ | $\frac{1}{2}\begin{bmatrix}0&0\\1&0\\0&1\\0&0\end{bmatrix}$ |
| 4 - 7 | $\frac{1}{2}\begin{bmatrix}0&0\\1&0\\0&0\\0&1\end{bmatrix}$ | $\frac{1}{2}\begin{bmatrix}0&0\\0&0\\1&0\\0&1\end{bmatrix}$ | $\frac{1}{2}\begin{bmatrix}1&0\\0&1\\1&0\\0&-j\end{bmatrix}$ | $\frac{1}{2}\begin{bmatrix}1&0\\0&1\\1&0\\0&j\end{bmatrix}$ |
| 8 - 11 | $\frac{1}{2}\begin{bmatrix}1&0\\0&1\\-j&0\\0&1\end{bmatrix}$ | $\frac{1}{2}\begin{bmatrix}1&0\\0&1\\-j&0\\0&-1\end{bmatrix}$ | $\frac{1}{2}\begin{bmatrix}1&0\\0&1\\-1&0\\0&-j\end{bmatrix}$ | $\frac{1}{2}\begin{bmatrix}1&0\\0&1\\-1&0\\0&j\end{bmatrix}$ |
| 12 - 15 | $\frac{1}{2}\begin{bmatrix}1&0\\0&1\\j&0\\0&1\end{bmatrix}$ | $\frac{1}{2}\begin{bmatrix}1&0\\0&1\\j&0\\0&-1\end{bmatrix}$ | $\frac{1}{2\sqrt{2}}\begin{bmatrix}1&1\\1&1\\1&-1\\1&-1\end{bmatrix}$ | $\frac{1}{2\sqrt{2}}\begin{bmatrix}1&1\\1&1\\j&-j\\j&-j\end{bmatrix}$ |
| 16 - 19 | $\frac{1}{2\sqrt{2}}\begin{bmatrix}1&1\\j&j\\1&-1\\j&-j\end{bmatrix}$ | $\frac{1}{2\sqrt{2}}\begin{bmatrix}1&1\\j&j\\j&-j\\-1&1\end{bmatrix}$ | $\frac{1}{2\sqrt{2}}\begin{bmatrix}1&1\\-1&-1\\1&-1\\-1&1\end{bmatrix}$ | $\frac{1}{2\sqrt{2}}\begin{bmatrix}1&1\\-1&-1\\j&-j\\-j&j\end{bmatrix}$ |
| 20 - 21 | $\frac{1}{2\sqrt{2}}\begin{bmatrix}1&1\\-j&-j\\1&-1\\-j&j\end{bmatrix}$ | $\frac{1}{2\sqrt{2}}\begin{bmatrix}1&1\\-j&-j\\j&-j\\1&-1\end{bmatrix}$ | - | - |

Table 5: Precoding matrix $W$ for three-layer transmission using four antenna ports (see reference [1])

| TPMI index | $W$ (ordered from left to right in increasing order of TPMI index) | | | |
|---|---|---|---|---|
| 0 - 3 | $\dfrac{1}{2}\begin{bmatrix}1&0&0\\0&1&0\\0&0&1\\0&0&0\end{bmatrix}$ | $\dfrac{1}{2}\begin{bmatrix}1&0&0\\0&1&0\\1&0&0\\0&0&1\end{bmatrix}$ | $\dfrac{1}{2}\begin{bmatrix}1&0&0\\0&1&0\\-1&0&0\\0&0&1\end{bmatrix}$ | $\dfrac{1}{2\sqrt{3}}\begin{bmatrix}1&1&1\\1&-1&1\\1&1&-1\\1&-1&-1\end{bmatrix}$ |
| 4 - 6 | $\dfrac{1}{2\sqrt{3}}\begin{bmatrix}1&1&1\\1&-1&1\\j&j&-j\\i&-i&-i\end{bmatrix}$ | $\dfrac{1}{2\sqrt{3}}\begin{bmatrix}1&1&1\\-1&1&-1\\1&1&-1\\-1&1&1\end{bmatrix}$ | $\dfrac{1}{2\sqrt{3}}\begin{bmatrix}1&1&1\\-1&1&-1\\j&j&-j\\-i&i&i\end{bmatrix}$ | - |

Table 6: Precoding matrix $W$ for four-layer transmission using four antenna ports (see reference [1])

| TPMI index | $W$ (ordered from left to right in increasing order of TPMI index) | | | |
|---|---|---|---|---|
| 0 - 3 | $\frac{1}{2}\begin{bmatrix} 1 & 0 & 0 & 0 \\ 0 & 1 & 0 & 0 \\ 0 & 0 & 1 & 0 \\ 0 & 0 & 0 & 1 \end{bmatrix}$ | $\frac{1}{2\sqrt{2}}\begin{bmatrix} 1 & 1 & 0 & 0 \\ 0 & 0 & 1 & 1 \\ 1 & -1 & 0 & 0 \\ 0 & 0 & 1 & -1 \end{bmatrix}$ | $\frac{1}{2\sqrt{2}}\begin{bmatrix} 1 & 1 & 0 & 0 \\ 0 & 0 & 1 & 1 \\ j & -j & 0 & 0 \\ 0 & 0 & j & -j \end{bmatrix}$ | $\frac{1}{4}\begin{bmatrix} 1 & 1 & 1 & 1 \\ 1 & -1 & 1 & -1 \\ 1 & 1 & -1 & -1 \\ 1 & -1 & -1 & 1 \end{bmatrix}$ |
| 4 | $\frac{1}{4}\begin{bmatrix} 1 & 1 & 1 & 1 \\ 1 & -1 & 1 & -1 \\ j & j & -j & -j \\ j & -j & -j & j \end{bmatrix}$ | - | - | - |

The selected SRS resource (i.e. beam) is indicated to the communication device via an SRI indication. In addition, the uplink transmission rank and selected precoding matrix from the codebook are indicated to the communication device via a rank identification (RI) and transmit precoding matrix identification (TPMI), respectively, in a DCI that schedules the uplink grant. The communication device then uses the indicated precoder matrix on the antenna ports corresponding to the indicated SRI for the uplink grant.

The current 5G NR codebook-based transmission may be considered as a frequency flat precoding scheme for the PUSCH, as the same precoder matrix is used for every assigned frequency domain resource. Although such a frequency-flat precoding scheme provides a low signaling overhead for the precoding matrix indication, it performs poor in typical uplink channels which are characterized by fading in frequency and time domain due to multipath propagation and movement of the communication device, respectively. To avoid the large performance loss in the so-called frequency-selective and time-varying multi-path channel environments, the precoder matrix may be adapted to the channel response in time and frequency domain for codebook-based uplink MIMO transmission.

In 3GPP Release 15, two types of subband-based PMI reporting schemes, namely Type-I and Type-II, for frequency-selective precoding of the PDSCH transmission in the downlink are supported. The PMI report indicates a set of precoder matrices selected by the communication device from a codebook for a number of configured subbands. The precoder matrices are determined based on CSI-RS DL measurements and adopted by the communication device with respect to the fading of the channel in the frequency domain. The precoder matrix for the s-th subband has a dual-stage structure: $F(s) = F_1 F_2(s)$, $s = 0 \ldots, S - 1$ (see reference [2]), where $S$ denotes the number of subbands. The matrix $F_1$ is a wide-band matrix, independent on subband s, and contains $2U$ spatial beamforming vectors (the so-called spatial beams) $b_u \in \mathbb{C}^{N_1 N_2 \times 1}$, $u = 1,..,U$ selected out of an oversampled DFT-codebook matrix for the two polarizations of the antenna array at the gNB,

$$F_1 = \begin{bmatrix} b_1 b_2 ... b_U & 0 & \cdots & 0 \\ 0 & \cdots & 0 & b_1 b_2 ... b_U \end{bmatrix} \in \mathbb{C}^{2N_1 N_2 \times 2U},$$

The matrix $F_2(s)$, is a combining/co-phasing matrix to combine the spatial beams of the s-th sub-band. The selection of the matrices $F_1$ and $F_2(s)$, $s = 0 \ldots, S - 1$, is performed by the communication device based on the knowledge of the current channel conditions and are indicated in the CSI report in the form of a RI and a PMI, which are used at the gNB for precoding the downlink scheduling grant.

A similar frequency-selective precoding scheme, as used in the downlink NR CSI reporting, may be applied for the uplink MIMO PUSCH transmission. However, a serious drawback of such a subband precoder is that the control-signaling overhead for the TPMI indication in the DCI increases linearly with the number of configured subbands. For large system bandwidths (and hence a large number of configured subbands), this not only results in a large control overhead, but also in downlink coverage problems of the control channel and a significant increase of the UE blind detection complexity due to the large number of bits for the TPMI indication in the DCI. A further drawback of the current NR codebook-based uplink precoding scheme is that it may only be used in quasi-static channel scenarios, where the UE does not move or moves only very slowly. When a user experiences fast-fading channel conditions, for example due to a high or fast movement of the UE in a multi-path channel environment, the transmit signals experience severe fading in time caused by the small-scale fading of the channel. Hence, for highly-dynamic channel scenarios, the TPMI needs to be frequently updated over time, otherwise, the overall efficiency of the communication system is drastically reduced. However, such a frequent TPMI update causes a high overhead of the control channel, which is not desired.

It is noted that the information in the above section is only for enhancing the understanding of the background of the invention and therefore it may contain information does not form prior art that is already known to a person of ordinary skill in the art.

It is an object of the present invention to provide an improved low-control signaling overhead TPMI indication scheme allowing the communication device an uplink precoding matrix adaptation over a set of configured frequency and/or time domain resources and port(s).

This object is achieved by the subject matter as defined in the independent claims.

Embodiments are defined in the dependent claims.

Embodiments of the present invention are now described in further detail with reference to the accompanying drawings, in which:

Fig. 1    shows a schematic representation of an example of a wireless communication system;

Fig. 2    shows a block-based model of a MIMO DL transmission using codebook-based-precoding in accordance with LTE release 8;

Fig. 3    is a schematic representation of a wireless communication system for communicating information between a transmitter, which may operate in accordance with the inventive teachings described herein, and a plurality of receivers, which may operate in accordance with the inventive teachings described herein; and

Fig. 4    shows a model of an UL transmission using codebook-based-precoding at a UE, which may operate in accordance with the inventive teachings described herein.

Fig. 5    illustrates an example of a computer system on which units or modules as well as the steps of the methods described in accordance with the inventive approach may execute.

In the following, preferred embodiments of the present invention are described in further detail with reference to the enclosed drawings in which elements having the same or similar function are referenced by the same reference signs.

As mentioned above, the currently used conventional TPMI indication schemes are disadvantageous so that there is a need for a new codebook-based TPMI indication design for uplink precoding that deals with the channel variations in frequency and time domains and provides in addition a very low control signaling overhead. In fact, the design, as proposed in accordance with embodiments of the present invention, performs precoding over frequency and time domain resources and adapts the precoder matrix with respect to the channel variations in both domains. The present invention is advantageous as it performs frequency-selective codebook-based uplink precoding, similar to the subband-based precoding scheme describe above, whereas, however, the TPMI signaling overhead does not depend on the number of configured subbands, thereby reducing the control signal overhead. Moreover, in accordance with embodiments of the present invention, the precoding scheme provides a low signaling overhead in channels with varying, i.e., fast fading channel conditions. This means even for channels with high UE mobility, the TPMI needs to be updated less frequently, e.g., with a rate similar to channels with low UE mobility.

The present invention makes use of the fact that large-scale channel parameters such as path loss and shadow fading may not change quickly over time, so that the channel variations are mainly related to small scale fading. This means in channels with high mobility, where the Doppler spread is high, the channel parameters of the impulse response such as path gains, +channel delays and Doppler-frequencies do not change over a longer time period, and the channel variations caused by the movement of the UE lead only to phase fluctuations caused by the superposition of the MIMO channel path components. The components of the precoder used in accordance with embodiments of the present invention are associated with one or more of those channel parameters (channel delays, Doppler-frequencies and angular parameters) that remain substantially identical for a long time period, and therefore they need to be less frequently updated.

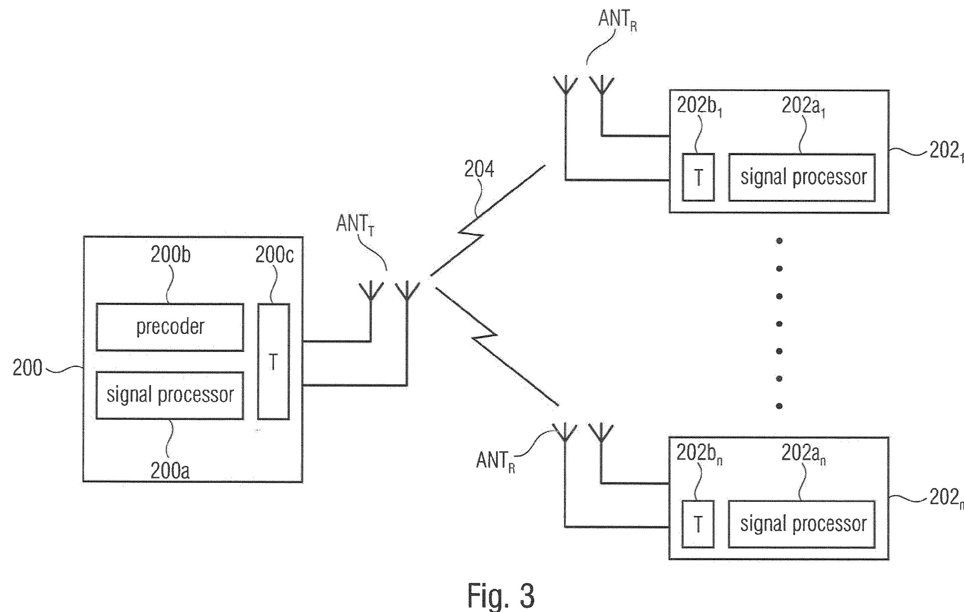

Embodiments of the present invention may be implemented in a wireless communication system or network as depicted in Fig. 1 including transmitters or transceivers, like base stations, and communication devices (receivers) or users, like mobile or stationary terminals or IoT devices, as mentioned above. Fig. 3 is a schematic representation of a wireless communication system for communicating information between a transmitter 200, like a base station, and a plurality of communication devices $202_1$ to $202_n$, like UEs, which are served by the base station 200. The base station 200 and the UEs 202 may communicate via a wireless communication link or channel 204, like a radio link. The base station 200 includes one or more antennas $ANT_T$ or an antenna array having a plurality of antenna elements, and a signal processor 200a. The UEs 202 include one or more antennas $ANT_R$ or an antenna array having a plurality of antennas, a signal processor $202a_1$, $202a_n$, and a transceiver $202b_1$, $202b_n$. The base station 200 and the respective UEs 202 may operate in accordance with the inventive teachings described herein.

## COMMUNICATION DEVICE

The present invention provides (see for example claim 1) a communication device for performing in a wireless communication system a transmission to a network entity, like a base station or another communication device of the wireless communication system,

wherein the communication device is to receive from the network entity of the wireless communication system a precoding matrix indicator indicating a precoder matrix for one or more transmission layers and transmission resources, like time domain resources and/or frequency-domain resources, of a transmission channel (PUSCH, PSSCH) to the network entity,

wherein the communication device includes a precoder, wherein the precoder is to precode, responsive to the received precoding matrix indicator, time domain resources and/or frequency-domain resources of the transmission channel (PUSCH, PSSCH) to the network entity over one or more ports of the communication device,

wherein the communication device is to perform the transmission to the network entity using the precoded time domain resources and/or frequency-domain resources of the transmission channel (PUSCH, PSSCH) over the one or more ports, and
wherein the precoder is based on one or more codebooks and a plurality of combining coefficients for complex combining components from the one or more codebooks, the one or more codebooks including one or more of:

- a spatial codebook comprising one or more spatial beam or port selection components of the precoder, and/or
- a delay codebook comprising one or more delay components of the precoder, and/or
- a Doppler-frequency codebook comprising one or more Doppler-frequency components of the precoder.

In accordance with embodiments (see for example claim 2), the precoder matrix includes a single codebook, the single codebook comprising either one or more delay components or one or more Doppler-frequency components of the precoder, and wherein the plurality of combining coefficients are for complex combining the selected components from the single codebook.

In accordance with embodiments (see for example claim 3), the precoder matrix includes two codebooks, a first codebook and a second codebook, wherein the plurality of combining coefficients are for complex combining the selected components from the two codebooks,
wherein the first codebook comprises one or more spatial beam or port selection components of the precoder, and the second codebook comprises one or more delay components of the precoder or one or more Doppler-frequency components of the precoder.

In accordance with embodiments (see for example claim 4), the precoder matrix includes two codebooks, a first codebook and a second codebook, wherein the plurality of combining coefficients are for complex combining the selected components from the two codebooks, wherein the first codebook comprises one or more one or more delay components of the precoder, and the second codebook comprises one or more Doppler-frequency components of the precoder.

In accordance with embodiments (see for example claim 5), the precoder matrix includes three codebooks, a first codebook, a second codebook and a third codebook, wherein the plurality of combining coefficients are for complex combining the selected components from the three codebooks,
wherein the first codebook comprises one or more spatial beam or port-selection components of the precoder, the second codebook comprises one or more delay components of the precoder, and the third codebook comprises one or more Doppler-frequency components of the precoder.

In accordance with embodiments (see for example claim 6), the precoding matrix indicator (TPMI) is decomposed into two parts, a first precoding matrix indicator and a second precoding matrix indicator, and
the communication device is to receive the first precoding matrix indicator in a first control information message (DCI, SCI) in a control channel (PDCCH, PSCCH) and the second precoding matrix indicator in a second control information message (DCI, SCI) in the control channel (PDCCH, PSCCH).

In accordance with embodiments (see for example claim 7), the first control information message (DCI, SCI) includes an indication field indicating the existence of a second control information message (DCI, SCI) including the second precoding matrix indicator, or wherein the existence of the second control information message (DCI, SCI) is indicated via a higher layer, e.g., RRC.

In accordance with embodiments (see for example claim 8), the precoding matrix indicator (TPMI) is decomposed into two parts, a first precoding matrix indicator and a second precoding matrix indicator, and
the communication device is to receive the first precoding matrix indicator in a control information message (DCIs, SCIs) in a control channel (PDCCH, PSCCH) and the second precoding matrix indicator as payload in a data channel (PDSCH, PSSCH).

In accordance with embodiments (see for example claim 9), the first control information message (DCI, SCI) includes an indication field indicating the existence of a second control information message (DCI, SCI) including a scheduling assignment for indicating the second precoding matrix indicator.

In accordance with embodiments (see for example claim 10),
the first precoding matrix indicator includes one or more of the following:

- an indication of the selected beam or port components of the precoder matrix,
- a transmission rank of the precoder matrix,
- one or more parameters indicating the delay configuration of the precoder matrix,
- one or more parameters of the Doppler-frequency configuration of the precoder matrix,
- one or more basis subset indicators for the delay components of the precoder matrix,
- one or more basis subset indicators for the Doppler-frequency components of the precoder matrix,
- an indication of the number of combining coefficients, and

the second precoding matrix indicator includes one or more of the following:

- one or more basis subset indicators for the delay components of the precoder matrix, if not contained in the first precoding matrix indicator
- one or more the basis subset indicators for the Doppler-frequency components of the precoder matrix, if not contained in the first precoding matrix indicator, and
- an indication of selected combining coefficients for the precoder matrix.

In accordance with embodiments (see for example claim 11), the precoding matrix indicator includes one or more basis subset indicators for the respective codebook components, e.g.,

- one or more delay basis subset indicators indicating the delay vectors, selected from the delay codebook or from another delay basis subset indicator, of the precoder matrix, and/or
- one or more Doppler-frequency basis subset indicators indicating the Doppler-frequency vectors, selected from the Doppler-frequency codebook or from another Doppler-frequency basis subset indicator, of the precoder matrix.

In accordance with embodiments (see for example claim 12), the indices associated with the vectors indicated in a basis subset indicator are within a pre-defined window.

## NETWORK ENTITY

The present invention provides (see for example claim 13) a network entity, like a base station or a communication device, for performing in a wireless communication system a transmission to a communication device of the wireless communication system,

wherein the network entity is to transmit to the network entity of the wireless communication system a precoding matrix indicator indicating a precoder matrix for one or more transmission layers and transmission resources, like time domain resources and/or frequency-domain resources, of a transmission channel (PUSCH, PSSCH) from the network entity to the communication device,

wherein the network entity is to decompose the precoding matrix indicator (TPMI) into two parts, a first precoding matrix indicator and a second precoding matrix indicator, and

wherein the network entity is to

- transmit the first precoding matrix indicator in a first control information message (DCI, SCI) in a control channel (PDCCH, PSCCH) and the second precoding matrix indicator in a second control information message (DCI, SCI) in the control channel (PDCCH, PSCCH), or
- transmit the first precoding matrix indicator in a control information message (DCIs, SCIs) in a control channel (PDCCH, PSCCH) and the second precoding matrix indicator as payload in a data channel (PDSCH, PSSCH).

In accordance with embodiments (see for example claim 14),

the communication device comprises one or more of a mobile terminal, or stationary terminal, or cellular IoT-UE, or an IoT device, or a ground based vehicle, or an aerial vehicle, or a drone, or a moving base station, or road side unit, or a building, or a macro cell base station, or a small cell base station, or a road side unit, or a UE, or a remote radio head, or an AMF, or an SMF, or a core network entity, or a network slice as in the NR or 5G core context, or any transmission/reception point (TRP) enabling an item or a device to communicate using the wireless communication network, the item or device being provided with network connectivity to communicate using the wireless communication network, and the network entity comprises a base station including one or more of a macro cell base station, or a small cell base station, or a central unit of a base station, or a distributed unit of a base station, or a road side unit, or a UE, or a remote radio head, or an AMF, or an SMF, or a core network entity, or a network slice as in the NR or 5G core context, or any transmission/reception point, TRP, enabling an item or a device to communicate using the wireless communication network, the item or device being provided with network connectivity to communicate using the wireless communication network.

## SYSTEM

The present invention provides (see for example claim 15) a wireless communication network, comprising one or more of the inventive communication devices and/or one or more of the inventive network entities.

**METHODS**

The present invention provides (see for example claim 16) a method for performing in a wireless communication system a transmission to a network entity, like a base station or another communication device of the wireless communication system, the method comprising:

receiving, at a communication device, from the network entity of the wireless communication system a precoding matrix indicator indicating a precoder matrix for one or more transmission layers and transmission resources, like time domain resources and/or frequency-domain resources, of a transmission channel (PUSCH, PSSCH) to the network entity,

responsive to the received precoding matrix indicator, precoding, using a precoder of the communication device includes time domain resources and/or frequency-domain resources of a transmission channel (PUSCH, PSSCH) to the network entity over one or more ports in the wireless communication system, and

transmitting, by the communication device, using the precoded time domain resources and/or frequency-domain resources of the transmission channel (PUSCH, PSSCH) over the one or more ports,

wherein the precoder is based on one or more codebooks and a plurality of combining coefficients for complex combining components from the one or more codebooks, the one or more codebooks including one or more of:

- a spatial codebook comprising one or more spatial beam or port selection components of the precoder, and/or
- a delay codebook comprising one or more delay components of the precoder, and/or
- a Doppler-frequency codebook comprising one or more Doppler-frequency components of the precoder.

The present invention provides (see for example claim 17) a method for performing in a wireless communication system a transmission from a network entity, like a base station or a communication device, to a communication device of the wireless communication system, the method comprising:

transmitting, by the network entity, to the communication device of the wireless communication system a precoding matrix indicator indicating a precoder matrix for one or more transmission layers and transmission resources, like time domain resources and/or frequency-domain resources, of a transmission channel (PUSCH, PSSCH) from the network entity to the communication device,

decomposing, by the network entity, the precoding matrix indicator (TPMI) into two parts, a first precoding matrix indicator and a second precoding matrix indicator,

transmitting the first precoding matrix indicator in a first control information message (DCI, SCI) in a control channel (PDCCH, PSCCH) and the second precoding matrix indicator in a second control information message (DCI, SCI) in the control channel (PDCCH, PSCCH), or

transmitting the first precoding matrix indicator in a control information message (DCIs, SCIs) in a control channel (PDCCH, PSCCH) and the second precoding matrix indicator as payload in a data channel (PDSCH, PSSCH).

**COMPUTER PROGRAM PRODUCT**

The present invention provides a computer program product comprising instructions which, when the program is executed by a computer, causes the computer to carry out one or more methods in accordance with the present invention.

Thus, embodiments of the present invention provide enhancements or improvements when compared to conventional TPMI indication schemes by providing an improved low-control signaling overhead TPMI indication scheme allowing the communication device an uplink precoding matrix adaptation over a set of configured frequency and/or time domain resources and port(s).

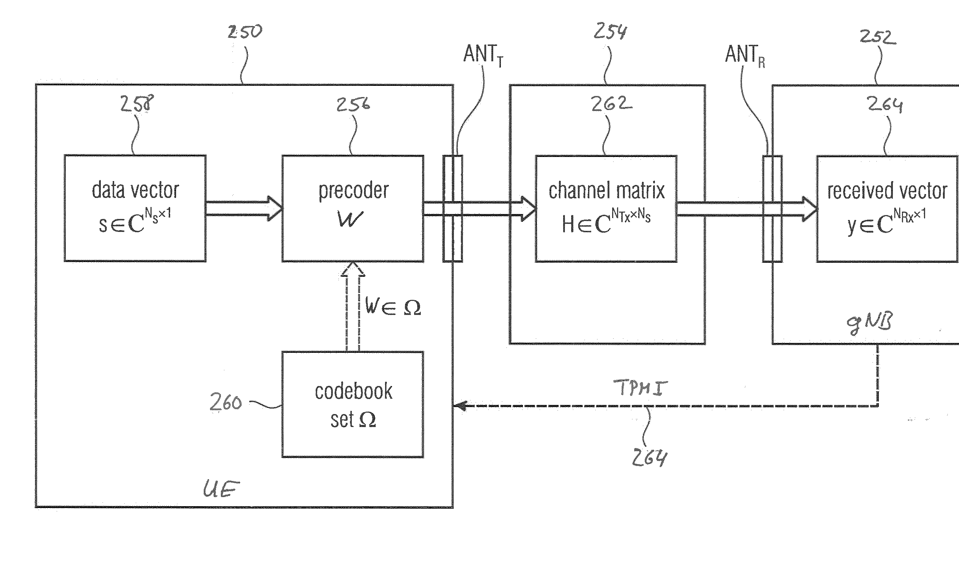

Fig. 4 shows a model of an UL transmission using codebook-based-precoding at the UE. Fig. 4 illustrates schematically the user equipment, UE, 250, the base station 252, gNB, and the channel 254, like a radio channel for a wireless data communication between the user equipment 250 and the base station 252. The user equipment 250 includes an antenna or an antenna array $ANT_T$ having a plurality of antennas or antenna elements, and a precoder 256 receiving a data vector 258 including data to be transmitted over the channel 254 to the base station 252. The precoder 256 includes a precoder matrix W from a codebook 260. The channel 254 may be described by the channel tensor/matrix 262. The base station 252 receives the data vector 264 via an antenna or an antenna array $ANT_R$ having a plurality of antennas or antenna elements. A feedback channel 266 is provided between the user equipment 250 and the base station 252 for transmitting feedback information, like the TPMI, so as to allow the UE 250 to precode the time domain resources and/or frequency-domain resources of the transmission channel (PUSCH, PSSCH).

In accordance with embodiments of the present invention a communication device for performing in a wireless communication system, like the one in Fig. 4, a transmission to a network entity of the wireless communication system, like a base station or another communication device, is provided. The communication device is to receive from the network entity of the wireless communication system a precoding matrix indicator indicating a precoder matrix for one or more transmission layers and transmission resources, like time domain resources and/or frequency-domain resources, of a transmission channel (PUSCH, PSSCH) to the network entity. The communication device includes a precoder, e.g., implemented by the signal processor 200a or 202a in Fig. 3. The precoder is to precode, responsive to the received transmission precoding matrix indicator, time domain resources and/or frequency-domain resources of the transmission channel (PUSCH, PSSCH) to the network entity over one or more ports of the communication device. The communication device is to perform the transmission to the network entity using the precoded time domain resources and/or frequency-domain resources of the transmission channel (PUSCH, PSSCH) over the one or more ports. The precoder is composed of or includes only transmission channel components that remain substantially identical or vary only within a predefined range for a time period exceeding a certain threshold, e.g., the transmission channel delays, the Doppler-frequencies and/or the angular parameters.

In accordance with further embodiments, the present invention provides a communication device for precoding time and/or frequency-domain resources of a physical uplink shared channel over one or more port(s) of the communication device. The communication device may have a transceiver to transmit and receive a signal, like the transceiver 200c or 202b in Fig. 3, and a controller, e.g., implemented by the signal processor 200a or 202a in Fig. 3, that receives from a base station or from another transmitter a transmit precoding matrix indicator, TPMI, indicating a precoder matrix ($W$) for one or more transmission layers and resources of the physical uplink shared channel. The precoder may be based on one or multiple codebooks, and the one or multiple codebooks may include a spatial codebook including one or more spatial beam or port selection components of the precoder, and/or a delay codebook including one or more delay components of the precoder, and/or a Doppler-frequency codebook including one or more Doppler-frequency components of the precoder. The precoder may be further based on a plurality of combining coefficients for complex combining the indicated components from the codebook(s). The communication device may transmit to the base station the time and/or frequency-domain resources of the physical uplink shared channel over the indicated port(s) using the precoder matrix.

In the following embodiments for the precoder matrix ($W$) and codebook configurations are described in more detail.

### Single-codebook based Uplink Precoding

#### 1. Delay-based precoding

In accordance with embodiments, the precoder matrix ($W$) is applied on a single port and is based on a single codebook, and the codebook comprises one or more delay components. The precoding is performed in the delay domain over a set of configured frequency resources and a single port. The precoder matrix may be represented for a number of configured frequency subbands $N_3$ by a dual-stage precoder $W = W_1 W_2$, where $W$ is of size $1 x N_3$, $W_1$ contains the complex combining coefficients for $D$ delay components, and $W_2$ contains the indicated $D$ delay components selected from the codebook. The parameter $N_3$ denotes the size of each delay vector and is associated with the configured frequency subband size $N_3$ of the precoder. The parameter $N_3$ may depend on the number of scheduled UL frequency resources ($N_f$) of the uplink signal, where $N_f$ may be defined by a number of a resource block groups (RBGs), or a number of resource blocks (RBs). An RBG is defined by a set of contiguously allocated RBs. In one embodiment, the size of each delay vector is identical to the number of allocated RBGs, or to the number of allocated RBs, and $N_3 = N_f$. In another embodiment, $N_3$ is a multiple of $N_f$, $N_3 = \alpha N_f$ where $\alpha > 1$. The parameter $\alpha$ may be a priori known at the communication device, or may be configured via a higher layer (e.g., using RRC signaling) by the base station or any other network entity.

The precoder matrix $W$ may also be represented by

$$W = P \sum_{d=0}^{D-1} \gamma_d\, d_d^H,$$

where

- $D$ is the number of delays,
- $\gamma_d$ is the combining coefficient associated with the $d$-th delay of the precoder,
- $d_d^H \in C^{1 \times N_3}$ is the $d$-th delay component, and
- $P$ is a scalar normalization factor to ensure a certain total transmission power.

Compared to subband-based frequency-selective uplink precoding where the signaling overhead for the precoder matrix indication scales linearly with the number of subbands (the system bandwidth is decomposed into a number of subbands and for each subband an indication of the precoder matrix is required), the signaling overhead for the indication of the delay-based combining coefficients (matrix $W_1$) is independent on the number of subbands $N_3$, and hence decoupled from the system bandwidth.

The above codebook-based uplink precoding scheme is, for example, beneficial for a wireless communication at mm-Wave (frequency range 2), where the uplink signal is associated with a single beam (and hence single port) and the impulse response of the corresponding beam-formed uplink channel is characterized by only few channel delays/taps. The corresponding precoder is then based on few delay vectors (matrix $W_2$), which are aligned with the few channel taps/delays of the radio channel. Hence, the signaling overhead for the TPMI indication (matrices $W_1$ and $W_2$) of the above precoder is much lower than that of a subband-based precoder.

2. Doppler-based precoding

In accordance with embodiments, the precoder matrix ($W$) is applied on a single port and is based on a single codebook, and the codebook comprises one or more Doppler-frequency components. The precoding is performed in the time/Doppler domain over a set of configured frequency resources. The precoder matrix may be represented for a configured number of frequency-domain subbands $N_3$ and a configured number of time-domain resources $N_4$ by a dual-stage precoder $W(s) = W_1(s)W_2(s)$, where $W(s)$ is the precoder matrix for the $s$-th frequency-domain subband ($s = 0, ..., N_3 - 1$) of size $1 \times N_4$, $W_1(s)$ contains the complex combining coefficients for the $F_s$ Doppler-frequency components for the $s$-th subband, and $W_2(s)$ contains the indicated $F_s$ Doppler-frequency components selected from the codebook for the $s$-th subband. The parameter $N_4$ denotes the size of each Doppler-frequency vector and is associated with the configured number of time-domain resources of the precoder. The parameter $N_4$ may depend on the number of scheduled UL time-domain resources ($N_{st}$) of the uplink signal, where $N_{st}$ may be given by a number of OFDM symbols. In an embodiment, the size of each Doppler-frequency vector is identical to the number of allocated time-domain symbols, $N_4 = N_{st}$. In another embodiment, $N_4$ is a multiple of $N_{st}$, $N_4 = \beta N_{st}$, where $\beta > 1$ or $\beta < 1$. The parameter $\beta$ may be a priori known at the communication device, or configured via higher layer (e.g., RRC signaling) by the base station or any other network entity.

The precoder matrix $W(s)$ may also be represented by

$$W(s) = P \sum_{f=0}^{F_s - 1} \gamma_f(s) \, f_{s,f}^H,$$

where

- $F_s$ is the number of Doppler-frequency components for the s-th subband,
- $\gamma_f(s)$ is the combining coefficient associated with the $s$-th subband and $f$-th Doppler-frequency component of the precoder,
- $f_{s,f}^H \in C^{1 \times N_4}$ is the $f$-th Doppler-frequency component for the s-th subband, and
- $P$ is a scalar normalization factor to ensure a certain total transmission power.

One of the advantages of the Doppler-based precoder described herein is that the precoder complexity and signaling overhead needed for indicating the combining coefficients is not dependent on the time-domain resource allocation. This means, the signaling overhead for the indication of the combining coefficients (matrix $W_1$) is independent on the number of time domain resources $N_4$, and hence decoupled from the scheduled number of time domain resources ($N_{st}$).

To further reduce the signaling overhead, the Doppler-components may be assumed to be identical per subband, such that $f_{s,f}^H = f_f^H$ and $F_s = F$.

The Doppler-codebook-based precoding scheme is, for example, beneficial for a wireless communication at mm-Wave (frequency range 2), where due to the linear dependency of the Doppler frequency on the carrier frequency, a main challenge of communication is to deal with the channel impairments caused by the high Doppler spread in mobility scenarios compared to sub-6 GHz (frequency range 1) communications. At mm-Wave, even small movements of the communication device traverse to several wavelengths, implying significant time-variations and potential deep fades of the channel. For the subband-based precoding scheme described above, the network has to trigger more frequently updates of the precoder to accurately track the channel variations. Obviously, the high update rate comes at the cost of higher battery consumption at the communication device and an increased use of downlink resources for the precoder indication. Moreover, when the update rate of the precoder indication is not sufficiently small with respect to the channel variation rate, a large performance loss may be observed. In summary, the Doppler-codebook-based precoding scheme has the following advantages over a subband-based precoding scheme:

- less downlink resources are required for the precoder matrix indication,
- the battery consumption at the communication device is reduced, and
- performance improvements if channel variations are fast.

**Two-codebook based uplink precoding**

1. Beam-delay-based MIMO precoding

In accordance with embodiments, the precoder matrix ($W$) is applied on a single or multiple port(s) and is based on a first codebook for one or more spatial beam or port selection components, and a second codebook for one or more delay components of the precoder. The precoding is performed in the delay and space domains for a number of layers over a set of configured frequency resources and ports. For a rank-1 transmission, the precoder matrix may be represented by a three-stage precoder $W = W_1 W_2 W_3$, where $W$ is of size $N_T x N_3$, $W_1$ contains $L$ spatial beams or port selection components of the precoder, $W_2$ contains the complex combining coefficients for the $D_i$ delay components per spatial beam, and $W_3$ contains the indicated $D_i$ delay vectors for each spatial beam. The precoder matrix $W$ may also be represented by

$$W = P \sum_{i=0}^{L-1} \sum_{d=0}^{D_i-1} \gamma_{i,d} b_i d_{i,d}^H,$$

where

- $L$ is the number of spatial beam/port-selection vectors,
- $N_T$ is the number of ports,
- $D_i$ is the number of delays for the $i$-th beam vector,
- $\gamma_{i,d}$ is the combining coefficient associated with the $d$-th delay and $i$-th spatial beam of the precoder,
- $b_i \in C^{N_T \times 1}$ is the $i$-th spatial beam component,
- $d_{i,d}^H \in C^{1 \times N_3}$ is the $d$-th delay component associated with the $i$-th spatial beam, and
- $P$ is a scalar normalization factor to ensure a certain total transmission power.

The above precoder formulation is applicable to any antenna port layout of the communication device. When the communication device is based on a co-polarized or dual-polarized antenna port layout, the total number of ports is either $N_T = N_1 N_2$ or $N_T = 2N_1 N_2$, respectively, where $N_1$ is the number of antenna ports with the same polarization in a first dimension, and $N_2$ is the number of antenna ports with the same polarization in a second dimension. For a 1D-port layout, $N_1 > 1$ and $N_2 = 1$, and for a 2D-port layout, $N_1 > 1$ and $N_2 > 1$. For a dual-polarized antenna port layout, the above precoder may be represented by

$$W^{(p)} = P \sum_{i=0}^{L-1} \sum_{d=0}^{D_i-1} \gamma_{p,i,d} b_{i,p} d_{p,i,d}^H,$$

where

- $L$ is the number of spatial beam/port-selection vectors,
- $D_i$ is the number of delays for the $i$-th beam vector,
- $\gamma_{p,i,d}$ is the combining coefficient associated with the $p$-th polarization (p=1,2), $d$-th delay and $i$-th spatial beam of the precoder,
- $\boldsymbol{b}_{i,p} \in C^{\bar{N}_t \times 1}$ is the $i$-th beam vector associated with the $p$-th polarization,
- $d_{p,i,d}^H \in C^{1 \times N_3}$ is the $d$-th delay vector associated with the $p$-th polarization and with the $i$-th spatial beam, and
- $P$ is a scalar normalization factor to ensure a certain total transmission power.

The above precoder may be extended to higher-rank transmissions (multiple transmission layers). The precoder matrix may then be represented by a three-stage precoder $\boldsymbol{W}^{(r,p)} = W_1^{(r,p)} W_2^{(r,p)} W_3^{(r,p)}$, where the tuple ($r,p$) denotes the $r$-th transmission layer and the $p$-th polarization. Similarly, to the above description, the precoder may be expressed by

$$W^{(r,p)} = P^{(r)} \sum_{i=0}^{L_r-1} \sum_{d=0}^{D_{r,i}-1} \gamma_{r,p,i,d} \boldsymbol{b}_{r,p,i} \, d_{r,p,i,d}^H,$$

where

- $L_r$ is the number of spatial beam/port-selection vectors of the $r$-th transmission layer,
- $D_{r,i}$ is the number of delays for the $i$-th beam vector and $r$-th transmission layer,
- $\gamma_{r,p,i,d}$ is the combining coefficient associated with the $p$-th polarization (p=1,2), $d$-th delay, $i$-th spatial beam and $r$-th transmission layer of the precoder,
- $\boldsymbol{b}_{r,p,i} \in C^{\bar{N}_t \times 1}$ is the $i$-th beam/port-selection vector associated with the $p$-th polarization of the $r$-th transmission layer,
- $d_{r,p,i,d}^H \in C^{1 \times N_3}$ is the $d$-th delay vector associated with the $p$-th polarization, $i$-th spatial beam and $r$-th transmission layer, and
- $P^{(r)}$ is a scalar normalization factor to ensure a certain total transmission power.

Note that for an arbitrary antenna layout, $\boldsymbol{W}^{(r,p)} = \boldsymbol{W}^{(r)}$, and $\bar{N}_t = N_t$, otherwise for a dual-polarized layout $\bar{N}_t = N_t/2$. Similar to the above single-codebook-based precoding scheme, the parameter $N_3$ denotes the length of the delay vectors and is associated with the configured frequency subband size of the precoder. The parameter $N_3$ may depend on the number of scheduled UL frequency resources ($N_f$) of the uplink signal, where $N_f$ may be defined by a number of a resource block groups (RBGs), or a number of resource blocks (RBs). In an embodiment, the size of each delay vector is identical to the number of allocated RBGs, or to the number of allocated RBs, and $N_3 = N_f$. In another embodiment, $N_3$ is a multiple of $N_f$, $N_3 = \alpha N_f$ where $\alpha > 1$. The parameter $\alpha$ may be a priori known at the communication device, or configured via higher layer (e.g., RRC signaling) by the base station or any other network entity.

The signaling overhead for the above two-codebook-based MIMO precoding scheme is independent on the number of subbands, and hence decoupled from the system bandwidth. As such, a benefit of the uplink precoding scheme described herein is that the signaling overhead for the precoding matrix indication does not depend on the system bandwidth/number of subbands.

## 2. Beam-Doppler-based MIMO precoding

In accordance with embodiments, the precoder matrix ($\boldsymbol{W}$) is applied on a single or multiple port(s) and is based on a first codebook for one or more spatial beam or port selection components, and a second codebook for one or more Doppler-frequency components of the precoder. The precoding is performed in the space and time/Doppler domains for a number of layers over a set of configured frequency resources, time domain resources and port(s). The precoder matrix may be represented for a configured number of frequency-domain subbands $N_3$, a configured number of time-domain resources $N_4$, and a configured number of ports by a three-stage precoder $\boldsymbol{W}(s) = \boldsymbol{W}_1 \boldsymbol{W}_2(s) \boldsymbol{W}_3$, where $\boldsymbol{W}$ is of size $N_T \times N_4$, $\boldsymbol{W}_1$ contains $L$ spatial beams or port selection components of the precoder, $\boldsymbol{W}_2(s)$ contains the complex combining coefficients for the $L$ spatial beams and $F_i$ Doppler-frequency components per spatial beam and $s$-th ($s$ =

0, ..., $N_3$ - 1) subband, and $W_3$ contains the indicated $F_i$ Doppler-frequency vectors for each spatial beam. For a dual-polarized antenna port layout, the precoder matrix $W$ may be represented for the $r$-th transmission layer by

$$W^{(r,p)} = P \sum_{i=0}^{L_r-1} \sum_{v=0}^{F_{r,i}-1} \gamma_{r,p,i,v}(s) b_{r,p,i} f_{r,p,i,v}^{H},$$

where

- $L_r$ is the number of spatial beam/port-selection vectors of the $r$-th transmission layer,
- $F_{r,i}$ is the number of Doppler-frequency components for the $i$-th beam vector of the $r$-th transmission layer,
- $\gamma_{r,p,i,v}(s)$ is the combining coefficient associated with the $p$-th polarization ($p=1,2$), $v$-th Doppler-frequency component and $i$-th spatial beam of the $r$-th transmission layer, $b_{r,p,i} \in C^{\bar{N}_t \times 1}$ is the $i$-th beam/port-selection vector associated with the $p$-th polarization of the $r$-th transmission layer,
- $f_{r,p,i,v} \in C^{N4 \times 1}$ is the $v$-th Doppler-frequency vector associated with the $p$-th polarization and with the $i$-th spatial beam of the $r$-th transmission layer, and
- $P$ is a scalar normalization factor to ensure a certain total transmission power.

Note that for an arbitrary antenna layout, $W^{(r,p)} = W^{(r)}$, and $\bar{N}_t = N_t$, otherwise for a dual-polarized layout $\bar{N}_t = N_t/2$. The parameter $N_4$ denotes the size of the Doppler-frequency vectors and is associated with the configured time-domain symbols of the precoder. The parameter $N_4$ may depend on the number of scheduled UL time-domain resources ($N_{st}$) of the uplink signal, where $N_{st}$ may be given by a number of OFDM symbols. In an embodiment, the size of each Doppler-frequency vector is identical to the number of allocated time-domain symbols, $N_4 = N_{st}$. In another embodiment, $N_4$ is a multiple of $N_{st}$, $N_4 = \beta N_{st}$, where $\beta > 1$ or $\beta < 1$. The parameter $\beta$ may be a priori known at the communication device, or configured via higher layer (e.g., RRC signaling) by the base station or any other network entity.

The advantage of the Beam-Doppler-based precoder described herein is that the precoder complexity and signaling overhead needed for indicating the combining coefficients is not dependent on the time-domain resource allocation. This means, the signaling overhead for the indication of the combining coefficients (matrix $W_2$) is independent on the number of time domain resources $N_4$, and hence decoupled from the scheduled number of time domain resources ($N_{st}$).

The Beam-Doppler codebook-based precoding scheme is, for example, beneficial for a wireless communication at mm-Wave (frequency range 2), where due to the linear dependency of the Doppler frequency on the carrier frequency, a main challenge of communication is to deal with the channel impairments caused by the high Doppler spread in mobility scenarios compared to sub-6 GHz (frequency range 1) communications. At mm-Wave, even small movements of the communication device traverse to several wavelengths, implying significant time-variations and potential deep fades of the channel. For the subband-based precoding scheme described above, the network has to trigger more frequently updates of the precoder to accurately track the channel variations. Obviously, the high update rate comes at the cost of higher battery consumption at the communication device and an increased use of downlink resources for the precoder indication. Moreover, when the update rate of the precoder indication is not sufficiently small with respect to the channel variation rate, a large performance loss may be observed. In summary, the Beam-Doppler codebook-based MIMO precoding scheme has the following advantages over a subband-based MIMO precoding scheme:

- less downlink resources are required for the precoder matrix indication,
- the battery consumption at the communication device is reduced, and
- performance improvements if channel variations are fast.

3. Doppler-delay-based precoding

In accordance with embodiments, the precoder matrix ($W$) is applied on a single port and is based on a first codebook for one or more delay components, and a second codebook for one or more Doppler-frequency components of the precoder. The precoding is performed in the delay and time/Doppler domains for a number of layers over a set of configured frequency resources and time domain resources. The precoder matrix may be represented for a configured number of frequency-domain subbands $N_3$, a configured number of time-domain resources $N_4$ by a three-stage precoder $W = W_1 W_2 W_3$, where $W$ is of size $N_3 x N_4$, $W_1$ contains $D$ delays of the precoder, $W_2$ contains the complex combining coefficients for the $F_{r,d}$ Doppler-frequency components per delay and layer, and $W_3$ contains the indicated $F_{r,d}$ Doppler-frequency vectors per delay. The precoder matrix $W$ may be represented for the r-th transmission layer by

$$W^{(r)} = P \sum_{d=0}^{D_r-1} \sum_{v=0}^{F_{r,d}-1} \gamma_{r,d,v} d^*_{r,d} f^H_{r,d,v},$$

- $D_r$ is the number of delay vectors of the r-th transmission layer,
- $F_{r,d}$ is the number of Doppler-frequency components for the $d$-th delay vector of the $r$-th transmission layer,
- $\gamma_{r,d,v}$ is the combining coefficient associated with the $v$-th Doppler-frequency component and $d$-th delay of the $r$-th transmission layer,
- $d_{r,d} \in C^{N_3 \times 1}$ is the $d$-th delay vector associated with the $r$-th transmission layer,
- $f_{r,d,v} \in C^{N_4 \times 1}$ is the $v$-th Doppler-frequency vector associated with the $d$-th delay of the $r$-th transmission layer, and
- $P$ is a scalar normalization factor to ensure a certain total transmission power.

The parameter $N_4$ denotes the size of each Doppler-frequency vector and is associated with the configured time-domain symbols of the precoder. The parameter $N_4$ may depend on the number of scheduled UL time-domain resources ($N_{st}$) of the uplink signal, where $N_{st}$ may be given by a number of OFDM symbols. In an embodiment, the size of each Doppler-frequency vector is identical to the number of allocated time-domain symbols, $N_4 = N_{st}$. In another embodiment, $N_4$ is a multiple of $N_t$, $N_4 = \beta N_{st}$, where $\beta > 1$ or $\beta < 1$. The parameter $\beta$ may be a priori known at the communication device, or configured via higher layer (e.g., RRC signaling) by the base station or any other network entity. Similar, the parameter $N_3$ denotes the size of the delay vectors and is associated with the configured frequency subband size of the precoder. The parameter $N_3$ may depend on the number of scheduled UL frequency resources ($N_f$) of the uplink signal, where $N_f$ may be defined by a number of a RBGs, or a number of RBs. In one embodiment, the size of each delay vector is identical to the number of allocated RBGs, or to the number of allocated RBs, and $N_3 = N_f$. In another embodiment, $N_3$ is a multiple of $N_f$, $N_3 = \alpha N_f$ where $\alpha > 1$. The parameter $\alpha$ may be a priori known at the communication device, or configured via higher layer (e.g., RRC signaling) by the base station or any other network entity.

The signaling overhead for the above Doppler-delay-codebook-based precoding scheme is independent on the number of subbands, and hence decoupled from the system bandwidth. As such, the signaling overhead for the precoding matrix indication does not depend on the system bandwidth/number of subbands. The Doppler-delay codebook-based precoding scheme is for example beneficial for a wireless communication at mm-Wave (frequency range 2), where the uplink signal is associated with a single beam (single port) and the impulse response of the corresponding beam-formed uplink channel is characterized by only few channel delays/taps. The corresponding precoder is then based on few delay vectors (matrix $W_1$), which are aligned with the few channel taps/delays of the radio channel. Hence, for wireless communication for example at mm-Wave (frequency range 2), the signaling overhead for the TPMI indication (matrices $W_1$, $W_2$ and $W_3$) of the above precoder is much lower than that of a subband-based precoder or the delay-based precoder described above.

**Three-codebook based uplink MIMO precoding**

1. Beam-delay-Doppler-based MIMO precoding

In accordance with embodiments, the precoder matrix ($W$) is applied on a single or multiple port and is based on a first codebook for one or more spatial beam components, a second codebook for one or more delay components and a third codebook for one or more Doppler-frequency components of the MIMO precoder. The precoding is performed in the delay, space and time/Doppler domains for number of layers over a set of configured frequency resources and time domain resources. The precoder matrix may be represented for a configured number of frequency-domain subbands $N_3$, a configured number of time-domain resources $N_4$, and a configured number of port(s) for a dual-polarized antenna layout for the r-th transmission layer by

$$W^{(r,p)} = P \sum_{i=0}^{L_r-1} \sum_{d=0}^{D_{r,i}-1} \sum_{v=0}^{F_{r,i,d}-1} \gamma_{r,p,i,d,v} b_{r,p,i} \otimes (d^*_{r,p,i,d} f^H_{r,p,i,d,v}),$$

- $L_r$ is the number of spatial beams/port selection vectors of the $r$-th transmission layer
- $D_{r,i}$ is the number of delay vectors of the $i$-th beam and $r$-th transmission layer,
- $F_{r,i,d}$ is the number of Doppler-frequency components for the $i$-th beam, $d$-th delay vector and $r$-th transmission layer,

- $\gamma_{r,p,d,v}$ is the combining coefficient associated with the $p$-th polarization (p=1,2), $i$-th beam, $v$-th Doppler-frequency component and $d$-th delay of the $r$-th transmission layer,
- $\boldsymbol{b}_{r,p,i} \in C^{\overline{N}_t \times 1}$ is the $i$-th beam/port-selection vector associated with the $p$-th polarization of the $r$-th transmission layer,
- $\boldsymbol{d}_{r,p,i,d} \in C^{N_3 \times 1}$ is the $d$-th delay vector associated with the $i$-th beam vector, $p$-th polarization of the $r$-th transmission layer,
- $\boldsymbol{f}_{r,p,d,v} \in C^{N_4 \times 1}$ is the $v$-th Doppler-frequency vector associated with the $p$-th polarization and with the $d$-th delay of the $r$-th transmission layer, and
- $P$ is a scalar normalization factor to ensure a certain total transmission power.

Note that for an arbitrary antenna layout, $\boldsymbol{W}^{(r,p)} = \boldsymbol{W}^{(r)}$, and $\overline{N}_t = N_t$, otherwise for a dual-polarized layout $\overline{N}_t = N_t/2$. The parameter $N_4$ denotes the size of each Doppler-frequency vector and is associated with the configured time-domain symbols of the precoder. The parameter $N_4$ may depend on the number of scheduled UL time-domain resources ($N_{st}$) of the uplink signal, where $N_{st}$ may be given by a number of OFDM symbols. In an embodiment, the size of each Doppler-frequency vector is identical to the number of allocated time-domain symbols, $N_4 = N_{st}$. In another embodiment, $N_4$ is a multiple of $N_{st}$, $N_4 = \beta N_{st}$, where $\beta > 1$ or $\beta < 1$. The parameter $\beta$ may be a priori known at the communication device, or configured via higher layer (e.g., RRC signaling) by the base station or any other network entity.

Similar, the parameter $N_3$ denotes the size of the delay vectors and is associated with the configured frequency subband size of the precoder. The parameter $N_3$ may depend on the number of scheduled UL frequency resources ($N_f$) of the uplink signal, where $N_f$ may be defined by a number of a RBGs, or a number of RBs. In one embodiment, the size of each delay vector is identical to the number of allocated RBGs, or to the number of allocated RBs, and $N_3 = N_f$. In another embodiment, $N_3$ is a multiple of $N_f$, $N_3 = \alpha N_f$ where $\alpha > 1$. The parameter $\alpha$ may be a priori known at the communication device, or configured via higher layer (e.g., RRC signaling) by the base station or any other network entity.

The advantage of the Beam-delay-Doppler-based MIMO precoder described herein is that the precoder complexity and signaling overhead needed for indicating the combining coefficients is not dependent on the time-domain and frequency-domain resource allocation. This means, the signaling overhead for the indication of the combining coefficients is independent on the number of time domain resources $N_4$ and independent on the number of configured frequency domain resources $N_3$, and hence decoupled from the scheduled number of time domain resources ($N_{st}$) and the number of subbands/system bandwidth, respectively.

## Definition and configuration of codebook(s)

### 1. Beam/port-selection codebook

*Port-selection codebook*

In accordance with embodiments, the communication device is configured with a beam/port-selection codebook, and the beam/port-selection codebook may comprise $\overline{N}_t$ vectors, wherein the $m$-th vector of size $\overline{N}_t \times 1$ contains a single one at the $m$-th position and zeros elsewhere. Note that such a codebook for uplink precoding is useful when the SRS resources used for uplink channel sounding are beamformed/precoded.

In accordance with embodiments, the communication device is configured with a beam/port-selection codebook, and the beam/port-selection codebook may comprise a number of vectors, wherein each vector comprises one or more '1' and zeros elsewhere. Note that such a codebook for uplink precoding is useful when the SRS resources used for uplink channel sounding are beamformed/precoded and multiple ports are already pre-combined of the precoder matrix.

In case of an arbitrary port layout, $\overline{N}_t$ may be given by $\overline{N}_t = N_t$. In case of a dual-polarized port layout, $\overline{N}_t$ may be given by $\overline{N}_t = N_t/2$.

*DFT-based codebook*

In accordance with embodiments, the communication device is configured with a beam/port-selection codebook for a 1D or 2D dual-polarized port layout, and the beam/port-selection codebook comprises a DFT-matrix of size $\overline{N}_t \times \overline{N}_t$, where $\overline{N}_t = N_1 N_2$, or an oversampled DFT matrix of size $\overline{N}_t \times O_{1,1} N_1 O_{1,2} N_2$ from which the vectors $\boldsymbol{b}$ (without index for simplicity) are selected. Here, $N_1$ and $N_2$ refer to the number of ports of the first dimension and the number of ports of the second dimension, respectively, and $O_{1,1}$ and $O_{1,2}$ refer to the oversampling factors with $O_{1,1} \in \{1,2,3,..\}$ and $O_{1,2} \in \{1,2,3,..\}$. The DFT- or oversampled DFT-codebook matrix contains a set of vectors, where each vector is represented by a Kronecker product of a length- $N_1$ DFT-vector $v_l, l = 0,..,O_{1,1}N_1 - 1$ corresponding to a vertical beam and a length-

$N_2$ DFT-vector $\boldsymbol{u}_m$, $m = 0,..,O_{1,2}N_2 - 1$ corresponding to a horizontal beam. The vectors $\boldsymbol{v}_l$ and $\boldsymbol{u}_m$ are defined by

$$v_l = \left[1, e^{j\frac{2\pi l}{O_{1,1}N_1}}, ..., e^{j\frac{2\pi l(N_1-1)}{O_{1,1}N_1}}\right]^T \text{ and } u_m = \left[1, e^{j\frac{2\pi m}{O_{1,2}N_2}}, ..., e^{j\frac{2\pi m(N_2-1)}{O_{1,2}N_2}}\right]^T, \text{ respectively, or by}$$

$$v_l = \left[1, e^{-j\frac{2\pi l}{O_{1,1}N_1}}, ..., e^{-j\frac{2\pi l(N_1-1)}{O_{1,1}N_1}}\right]^T \text{ and } u_m = \left[1, e^{-j\frac{2\pi m}{O_{1,2}N_2}}, ..., e^{-j\frac{2\pi m(N_2-1)}{O_{1,2}N_2}}\right]^T, \text{ respectively.}$$

*Combination of port-selection and DFT-based codebook*

In accordance with embodiments, the communication device is configured with a beam/port-selection codebook, and the beam/port-selection codebook comprises a DFT- or oversampled DFT-matrix, and in addition a subset of the codebook comprises a subset of a port-selection codebook matrix.

In accordance with embodiments, the communication device is configured with a beam/port-selection codebook for a dual-polarized port layout, and the beam/port-selection codebook is a combination of a DFT-based codebook and a port-selection codebook. The beam/port-selection codebook comprises a DFT-matrix of size $\overline{N}_t \times \overline{N}_t$, where $\overline{N}_t = N_1 N_2$, or an oversampled DFT matrix of size $\overline{N}_t \times O_{1,1}N_1 O_{1,2}N_2$, where one or more entries of each DFT-vector are set to zero. Such a codebook is useful when only a subset of UE ports is used for an uplink MIMO transmission. The zero-entries of each DFT-vector (i.e., the non-selected antenna ports) may be configured by the base station or any other network entity via a higher layer (e.g., RRC or MAC-CE) or via a physical layer (DCI).

*Matrix-based codebook*

In accordance with embodiments, the communication device is configured with a beam/port-selection codebook, and the beam/port-selection codebook is given by subsets of matrices and each subset of matrices is associated with a transmission rank. In one embodiment, a single beam may be used per layer and a vector $\boldsymbol{b}$ is represented by a column-vector of a matrix. In another embodiment, multiple beams may be used per layer and a vector $\boldsymbol{b}$ of a layer is represented by a column-vector of a matrix. For example, the beam/port-selection codebook may be given by the NR Rel. 15 UL MIMO codebook (see reference [1]).

2. Delay codebook

In accordance with embodiments, the communication device is configured with a delay codebook, wherein the delay codebook comprises a DCT-based matrix from which the delay vectors $\boldsymbol{d}$ are selected.

In accordance with embodiments, the communication device is configured with a delay codebook, and the delay codebook comprises a DFT-matrix of size $N_3 \times N_3$, or an oversampled DFT-matrix of size $N_3 \times N_3 O_2$ from which the delay vectors $\boldsymbol{d}$ (without indexation for simplicity) are selected, where $N_3$ refers to the number of configured sub-bands (or frequency domain resources), and $O_2$ refers to the oversampling factor $O_2 = 1,2,....$ Each vector may be represented by a length-$N_3 O_2$ DFT-vector $c_l = \left[1, e^{j\frac{2\pi l}{O_2 N_3}}, ..., e^{j\frac{2\pi l(N_3-1)}{O_2 N_3}}\right]^T$ or $c_l = \left[1, e^{-j\frac{2\pi l}{O_2 N_3}}, ..., e^{-j\frac{2\pi l(N_3-1)}{O_2 N_3}}\right]^T$, $l = 0,..,O_2 N_3 - 1$. Each entry in the codebook matrix is associated with a specific delay.

3. Doppler-frequency codebook

In accordance with embodiments, the communication device is configured with a Doppler-frequency codebook, wherein the Doppler-frequency codebook comprises a DCT-based matrix from which the Doppler vectors $\boldsymbol{f}$ are selected.

In accordance with embodiments, the communication device is configured with a Doppler-frequency codebook, and the Doppler-frequency codebook comprises a DFT-matrix of size $N_4 \times N_4$, or an oversampled DFT-matrix of size $N_4 \times N_4 O_3$ from which the Doppler vectors $\boldsymbol{f}$ (without indexation for simplicity) are selected, where $N_4$ refers to the number of configured time domain resources, and $O_3$ refers to the oversampling factor $O_3 = 1,2, .....$ Each vector may be represented by a length-$N_4 O_3$ DFT-vector $c_l = \left[1, e^{j\frac{2\pi l}{O_3 N_4}}, \dots, e^{j\frac{2\pi l(N_4-1)}{O_3 N_4}}\right]^T$ or $c_l =$

$\left[1, e^{-j\frac{2\pi l}{O_3 N_4}}, \dots, e^{-j\frac{2\pi l(N_4-1)}{O_3 N_4}}\right]^T$, $l = 0,..,O_3 N_4 - 1$. Each entry in the codebook matrix is associated with a specific Doppler frequency.

4. Codebook configuration

In accordance with embodiments, the communication device is configured with the parameter $\overline{N}_t$ indicating the number of ports (per polarization for a dual-polarized port layout) used for the uplink beam/port-selection codebook, or with parameters $N_1$ and/or $N_2$ indicating the number of ports (per polarization for a dual-polarized port layout) and per dimension used for the uplink beam/port-selection codebook.

In the case of a DFT-based codebook, the communication device may be configured with the parameters $O_{1,1}$ and/or $O_{1,2}$ indicating the oversampling factors of the uplink beam/port-selection codebook in the two dimensions.

In the following embodiments for the configuration of the beam/port-selection codebook are provided.

In one embodiment, the parameters $\overline{N}_t$, or $N_1$ and/or $N_2$, are a priori known at the communication device, and hence no signaling for those parameters is required.

In another embodiment, the parameters $\overline{N}_t$, or $N_1$ and/or $N_2$ are configured by the base station or any other network entity via higher-layer (e.g., RRC signaling), or via a physical layer (e.g., via the DCI).

In one embodiment, the parameters $O_{1,1}$ and/or $O_{1,2}$ are a priori known at the communication device, and hence no signaling for those parameters is required.

In one embodiment, the parameters $O_{1,1}$ and/or $O_{1,2}$ are configured by the base station or any other network entity via higher-layer (e.g., RRC signaling), or via a physical layer (e.g., via the DCI).

The communication device may be configured with the parameter(s) $N_3$ and/or $N_4$ via higher layer or physical layer from the base station or any other network identity, or the parameter(s) $N_3$ and/or $N_4$ may be a priori known at the communication device.

For example, the parameter $N_3$ may implicitly be given by the number of scheduled frequency domain resources (which are indicated via the DCI), as described above. Similarly, the parameter $N_4$ may implicitly be given by the number of scheduled time domain resources (which are indicated via the DCI), as described above.

The communication device may be configured with the parameter $O_2$ via higher layer or physical layer from the base station or any other network identity, or the parameter $O_2$ may be a priori known at the communication device. For example, the parameter may be known and fixed, e.g., $O_2 = 4$ or $O_2 = 1$.

The communication device may be configured with the parameter $O_3$ via higher layer or physical layer from the base station or any other network identity, or the parameter $O_3$ may be a priori known at the communication device. For example, the parameter may be known and fixed, e.g., $O_3 = 4$ or $O_3 = 1$.

**Beam/port configuration - Indication of spatial beams/ports for the precoding matrix**

In accordance with embodiments, the communication device is configured with at least a beam/port-selection codebook and receives a beam/port configuration. The beam/port configuration may comprise one or more parameters indicating the number of beams/ports used per transmission layer, per subset of transmission layers, or for all transmission layers of the precoder matrix. For example, the number of beams/ports may be identical over the transmission layers, i.e., $L_r = L$. Then, the beam/port configuration comprises only a single parameter $L$ for the configuration of the precoder matrix.

In accordance with embodiments, the communication device is configured to receive a beam/port configuration, and the beam/port configuration may comprise one or more parameters indicating the transmission rank of the precoder matrix.

In accordance with embodiments, the communication device is configured to receive a beam/port configuration that may comprise one or more beam/port basis indicator(s) indicating the beam/port-selection vectors selected from the beam/port-selection codebook and used for the transmission layers of the precoder matrix.

A beam/port basis subset indicator may be provided that indicates the selected beams/ports of a layer (and per polarization). Note that a beam/port basis subset indicator may be identical for subset of layers, or for all layers. A beam/port basis subset indicator may be identical for the two polarizations of UE antenna ports in the case of a dual-polarized port layout. The following describes embodiments of a beam/port basis subset indicator for a port-selection-based codebook.

In one embodiment, a beam/port basis subset indicator may indicate $B$ (pre-combined) ports used in a single beam/port-vector per layer of the precoder matrix.

In another embodiment, a beam/port basis subset indicator may indicate $B$ ports used by $B$ beam/port-vectors per layer of the precoder matrix.

In an embodiment, the beam/port basis subset indicator is represented by a bitmap, where each bit in the bitmap is associated with a UE port. In the case of a dual-polarized port layout, the bitmap may be associated with a single polarization of the UE ports. A '1' may indicate that the associated UE port is used for signal precoding, and a '0' may indicate that the associated UE port is not used for signal precoding. The bitmap may contain $B$ '1s', and either indicate $B$ (pre-combined) ports of a single beam/port-vector, or the bitmap may indicate $B$ ports used by $B$ beam/port-vectors, wherein each beam/port-vector contains a single '1' and zeros elsewhere. For example, a bitmap of '1100' may indicate the beam/port-selection vector $[1,1,0,0]^T$, or it may indicate the two beam/port-selection vectors $[1,0,0,0]^T$ and $[0,1,0,0]^T$.

Note that the bitmap may be polarization-dependent or not. In one embodiment, a bitmap of '10' may indicate the beam/port-selection vector $[1,0]^T$ for both polarizations of the UE ports. In another embodiment, a bitmap of '10' may indicate the beam/port-selection vector $[1,0]^T$ only for a single polarization.

In an embodiment, a beam/port basis subset indicator is represented by a $\left\lceil \log_2 \binom{A}{B} \right\rceil$ bit indicator, where $A$ represents the total number of UE antenna ports, and $B$ the number of selected UE antenna ports in the case of a port-selection-based codebook.

The bit indicator may indicate $B$ (pre-combined) ports of a single beam/port-vector, or it may indicate $B$ ports used by $B$ beam/port-vectors, wherein each beam/port-vector contains a single '1' and zeros elsewhere.

In an embodiment, a beam/port basis subset indicator may be represented by a $\left\lceil \log_2 \binom{\bar{N}_t}{L_r} \right\rceil$ bit indicator for an arbitrary or dual-polarized antenna port layout. Note that for a dual-polarized port-layout the same beam/port basis subset indicator may be used for the two polarizations of the ports. Also note that $\bar{N}_t = N_t$ for an arbitrary port layout, or $\bar{N}_t = N_t/2$ for a dual polarized port layout.

In an embodiment a beam/port basis subset indicator may be represented by two $\left\lceil \log_2 \binom{\bar{N}_t}{L_r} \right\rceil$ bit indicators for a dual-polarized port layout, where each beam/port basis subset indicator is associated with one polarization of the port layout.

In an embodiment, a beam/port basis indicator is used for a subset of layers, i.e., the same beams/ports are used for a subset of layers.

In an embodiment, a single beam/port basis indicator is used for all layers. For example, the beam/port basis indicator is given by a $\left\lceil \log_2 \binom{\bar{N}_t}{L} \right\rceil$ bit indicator, or by two $\left\lceil \log_2 \binom{\bar{N}_t}{L} \right\rceil$ bit indicators for the two polarizations (in the case of a dual-polarized port layout).

In an embodiment, a single beam/port basis indicator is used for all layers and a single and different beam/port is used per layer. The beam/port basis indicator is given by a $\left\lceil \log_2 \binom{\bar{N}_t}{R} \right\rceil$ bit indicator, or by two $\left\lceil \log_2 \binom{\bar{N}_t}{R} \right\rceil$ bit indicators for the two polarizations (in the case of a dual-polarized port layout), where $R$ denotes the transmission rank.

The following describes embodiment of a beam/port basis subset indicator for a DFT-based beam/port-selection-based codebook.

In accordance with embodiments, the communication device is configured with at least a DFT-based beam/port-selection codebook and a beam/port configuration that may comprise one or more beam/port basis indicator(s) indicating the beams/port-selection vectors selected from the DFT-based beam/port-selection codebook for the transmission layers of the precoder matrix. In addition, beam/port basis indicator(s) may contain one or more bitmaps indicating the selected antenna ports per beam, subset of beams, or all beams for a single transmission layer, subset of transmission layers, or all transmission layers of the precoder matrix. A beam/port basis indicator may be represented by a $\left\lceil \log_2 \binom{A}{B} \right\rceil$ bit indicator, where $A$ represents the number of UE beams and $B$ the number of selected UE beam vectors.

The following describes embodiments of a beam/port basis subset indicator for a matrix-based beam/port-selection-based codebook.

In accordance with embodiments, the communication device is configured with at least a matrix-based beam/port-selection codebook and a beam/port configuration that may comprise one or more beam/port basis indicator(s) indicating the beams/port-selection vectors selected from the matrix-based beam/port-selection codebook for the transmission layers of the precoder matrix.

In one embodiment, a beam/port basis subset indicator represents an indication to a single entry of the beam/port-selection codebook, where

- each single entry is given by a matrix and comprises one or more vectors representing the beam/port-selection vectors for a transmission layer of the precoder (possibly per polarization in the case of a dual polarized port layout), or
- each single entry is given by a matrix, where each column vector of the matrix represents a beam/port-selection vector per transmission layer (possibly per polarization in the case of a dual polarized port layout) of the precoder.

In accordance with embodiments, the beam/port configuration may be signaled via a higher layer (e.g., RRC or MAC-CE), or via a physical layer (e.g., DCI) to the communication device, or the beam/port configuration may be a priori known at the communication device.

In accordance with embodiments, the one or more parameters indicating the number of beams/ports used per transmission layer may be signaled via a higher layer (e.g., RRC or MAC-CE) to the communication device, or they may be a priori known at the communication device.

In accordance with embodiments, the one or more beam/port basis indicator(s) are signaled via a physical layer (e.g., DCI) from the base station or any other network entity to the communication device.

In accordance with embodiments, the one or more beam/port basis indicator(s) are signaled via a physical layer (e.g., DCI) from the base station or any other network entity to the communication device.

In accordance with embodiments, the one or more parameters indicating the transmission rank of the precoder matrix are signaled via a physical layer (e.g., DCI) from the base station or any other network entity to the communication device.

### Delay configuration - Indication of delay components for the precoder matrix

In accordance with embodiments, the communication device is configured with at least a delay codebook and a delay configuration, and the delay configuration comprises one or more parameters indicating the number of delays used for all transmission layers, or per transmission layer, or per subset of transmission layers of the precoder matrix. In one embodiment, the number of delays may be identical for all transmission layers, i.e., $D_r = D,$ and the delay configuration comprising only a single parameter ($D$) for the configuration of the number of delay vector(s) of the precoder matrix.

In accordance with embodiments, the delay configuration may be signaled via a higher layer (e.g., RRC or MAC-CE), or via a physical layer (e.g., DCI), or the delay configuration may be a priori known at the communication device.

If the communication device is configured with a spatial beam codebook, then the delay configuration may comprise one or more parameters indicating the number of delays per beam and transmission layer.

In one embodiment, the number of delays per beam may be identical for a layer, i.e., $D_{r,i} = D_r$. Then, the delay configuration comprises the parameters $D_r$ for the configuration of the number of delays per layer (for all beams).

In another embodiment, the number of delays may per beam and layer be identical for all layers, i.e., $D_{r,i} = D$. Then, the delay configuration comprises the single parameter $D$ for the configuration of the number of delays per beam and layer.

In yet another embodiment, the number of delays per beam may be identical for a subset of layers. Then, the delay configuration comprises for the $h$-th subset of layers a parameter $D_h$ ($h = 0, ..., H - 1$) for the configuration of the number of delays for the layers (for all beams) in the subset.

In accordance with embodiments, the communication device is configured with at least a delay codebook and a delay configuration that comprises one or more delay basis indicator(s) indicating the delay vectors used for the transmission layers of the precoder matrix.

If the communication device is configured with a spatial beam codebook, the delay configuration may comprise one or more delay basis indicator(s) indicating the selected delays/delay vectors for a beam or a subset of beams per layer.

The number of delays used per beam and/or layer for the precoder matrix may be rank-specific, i.e., the number of delays may be different with respect to different transmission ranks. For example, assuming a rank-4 transmission and an identical number of delays per layer, $D = 2$, and for a rank-2 transmission and an identical number of delays per layer, $D = 4$.

In accordance with embodiments, the communication device may be configured with a delay configuration for rank-1 (or any other rank) by a base station or any other network entity, and based on the delay configuration for rank-1, the communication device derives one or more parameters of the delay configuration for other transmission ranks by a known rule. For example, for a rank-1 transmission and an identical number of delays per layer (and beam if configured), the communication device may be configured with $D_{rank-1} = 4$, and for a rank-4 transmission and an identical number of delays per layer (and beam if configured), $D_{rank-4} = \frac{D_{rank-1}}{2} = 2$.

In accordance with embodiments, the delay configuration comprises one or more delay basis subset indicators indicating the selected delay vectors from the delay codebook or from another delay basis indicator used by the precoder matrix. A delay basis subset indicator may be associated with a transmission layer and beam (if configured) and may be identical for subsets of transmission layers and/or subset of beams.

In the following, embodiments for the delay basis indicator are presented.

A delay basis subset indicator may indicate a set of delay vectors selected from the delay codebook, or it may indicate a set of delay vectors selected from another delay basis indicator.

In one embodiment, a first delay basis subset indicator may indicate the delay vectors for all layers of the precoder matrix selected from the delay codebook, and a second delay basis subset indicator may indicate the delay vectors for a layer selected from the first delay basis subset indicator.

In another embodiment, assuming a communication device is configured with a delay codebook and beam/port-selection codebook, a first delay basis subset indicator may indicate the delay vectors for a layer of the precoder matrix selected from the delay codebook and a second delay basis subset indicator may indicate the delay vectors for a beam of that layer of the precoder matrix selected from the first delay basis subset indicator.

In accordance with embodiments, a delay basis subset indicator may be represented by a bitmap indicating the selected delay vectors used for the precoding matrix. Each bit in the bitmap may be associated with a delay vector of the codebook, or a delay vector from another delay basis indicator. For example, a "1" in the bitmap may indicate that the associated delay vector is selected, and a "0" may indicate that the associated delay vector is not selected.

In accordance with embodiments, a delay basis subset indicator may be represented by a combinatorial indicator, i.e., $\binom{A}{B}$ indicating $B$ selected delay vectors out of $A$ delay vectors, wherein the $A$ delay vectors are either associated with the delay vectors from the delay codebook, or with the delays from another delay basis subset indicator.

The following describe more specific embodiments for the delay basis subset indication.

In accordance with embodiments, each delay basis subset indicator is associated with a layer and is given by a $N_3$-sized bitmap, where each bit in the bitmap is associated with a delay vector from the delay codebook. Here, $N_3$ denotes the number of vectors in the delay codebook. In another embodiment, the delay basis subset indicator for a transmission layer is given by a $\left\lceil \log_2 \binom{N_3}{D_r} \right\rceil$ bit indicator.

If the communication device is configured with a spatial beam codebook, according to an embodiment, a delay basis subset indicator may be assumed to be identical for all beams of a layer. This means each beam of a layer is associated with the same delay vectors. In another embodiment, each delay basis subset indicator is associated with a transmission layer and a beam (or a subset of beams). The delay indicator may be represented by a bitmap, or by a $\left\lceil \log_2 \binom{N_3}{D_{r,i}} \right\rceil$ bit indicator.

In another embodiment, a common delay basis indicator per layer and a set of individual delay basis subset indicators may be assumed, wherein each individual delay basis subset indicator is associated with a beam or a subset of beams. The common delay basis subset indicator for the r-th layer may be given by a $\left\lceil \log_2 \binom{N_3}{D_r} \right\rceil$ bit indicator, or by an $N_3$-sized bitmap, indicating $D_r$ delay vectors selected from the delay codebook. An individual delay basis subset indicator per beam (or set of beams per layer) may be given by a bitmap of size $D_r$, indicating $D_{r,i}$ delay vectors from the common delay basis subset indicator of the r-th layer. Instead of a bitmap, the delays per beam (or per subset of beams) of a layer may be indicated by a $\left\lceil \log_2 \binom{D_r}{D_{r,i}} \right\rceil$ bit-indicator.

In another embodiment, a single common delay basis indicator for all layers and a set of individual $R$ delay basis subset indicators may be assumed, wherein each individual delay basis subset indicator is associated with one of the $R$ layers (or subset of layers). For example, the common delay basis subset indicator may be given by a

$\left\lceil \log_2 \binom{N_3}{\overline{D}} \right\rceil$ bit indicator, or by an $N_3$-sized bitmap. Here, $\overline{D}$ denotes the maximum number of delays per beam and layer. Each individual delay basis subset indicator for a layer (or subset of layers) may be given by a sub-bitmap of size $\overline{D}$, or a $\left\lceil \log_2 \binom{\overline{D}}{\overline{D}_r} \right\rceil$ sub-bit-indicator, indicating the delays/delay vectors from the common delay basis indicator for a layer. Note that for the discussed delay configuration, the delays per beam are assumed to be identical per layer. Also note that in the bit indicators, the parameter $\overline{D}_r$ may be identical for subset of layers, or all layers, such that $\overline{D}_r = \overline{D}$.

In another embodiment, a single common delay basis indicator is used for all layers and beams. In an embodiment, the common delay basis subset indicator may be given by a $\left\lceil \log_2 \binom{N_3}{D} \right\rceil$ bit indicator, or by an $N_3$-sized bitmap, indicating $D$ delays/delay vectors selected from the delay codebook.

In accordance with embodiments, any of the parameters $D_{r,i}$, $D_r$, $\overline{D}_r$, $\overline{D}$, or $D$ may be either a priori known at the communication device, configured via higher layer (e.g., RRC or MAC-CE), or indicated via the physical layer (DCI).

### Reduction of signaling overhead for delay basis subset indication

The indication of the configuration of the delay vector indices for the precoder matrix may increase the signaling overhead significantly. This may be an issue when signaling the delay configuration via a physical control channel (e.g., the PDCCH) where the resources are strictly limited.

In the following, several embodiments are described that reduce such overhead, or that completely avoid the need of an explicit signaling of the delay configuration are presented.

In accordance with embodiments, the delay indices ($m$) of the associated delay vectors selected from the delay codebook and indicated by a delay indicator are within a pre-defined window:

$$m = mod(M_0 + n, N_3), \ 0 \le n \le W - 1,$$

where $W$ denotes the window size, and $mod(a,b)$ denotes the modulo operation of $a$ with respect to $b$. Note for this scheme, it is assumed that a $N_3$-modulo shift operation (i.e., a cyclic shift operation) is performed on the selected delay vectors and precoding coefficients with respect to a reference delay (delay index) for all layers. Consequently, the position ($M_0$) of the window is either known at the communication device and does not need to be signaled by the base station or any other network entity, or it is configured by the base station or any other network entity.

The window-size parameter ($W$) may be identical or different with respect to the layers of the precoder matrix, and it is either a priori known at the communication device, or configured via a higher layer (e.g., RRC or MAC-CE), or indicated via the physical layer.

When the window-size parameter ($W$) is small, each layer of the precoder matrix may be configured with all delay vectors within the window. An additional signaling of the delay indicator(s) for the configuration of the precoder matrix is then not needed.

In one embodiment, there is a single delay indicator (identical delay vectors per layer) for all layers which is signaled to the communication device. The single delay indicator is given by a $\left\lceil \log_2 \binom{W}{D} \right\rceil$ bit indicator, where $W$ and $D$ denote the window size and number of selected delays within the window, respectively. The parameter $D$ is either higher-layer configured, or a priori known, or indicated via the physical layer.

In another embodiment, the single delay indicator is given by a $W$-length bitmap, where the bitmap contains $D$ 1's. Each bit in the bitmap is associated with a delay vector in the window. A '1' in the bitmap may indicate that the associated delay vector is selected, and a '0' may indicate that the associated delay vector is not selected.

In another embodiment, there is a single common delay indicator per layer that indicates the set of the delay indices for the precoder for a layer (and per beam or subset of beams if a spatial codebook is configured). A common delay indicator for a layer may be given by a $\left\lceil \log_2 \binom{W}{D_r} \right\rceil$ bit indicator, where $W$ and $D_r$ denote the window size and number of selected delay vectors within the window for the r-th layer, respectively. The parameter $D_r$ is either higher-layer configured, or a priori known, or indicated via the physical layer. Alternatively, a common delay indicator for a layer is given by a *W*-length bitmap, indicating the $D_r$ delay vectors.

If a spatial codebook is configured, the delay configuration may comprise a set of delay basis subset indicators per beam (or per subset of beams) and layer that indicate the delay vectors per beam (or subset of beams) selected from the common delay basis subset indicator for that layer. The delay indicator for the r-th layer and i-th beam (or subset of beams) may be given by a $\left\lceil \log_2 \binom{D_r}{D_{r,i}} \right\rceil$ bit indicator, or by a bitmap indicating $D_{r,i}$ selected delays from the common delay indicator.

## Doppler-frequency configuration - Indication of Doppler-frequency components for the precoder matrix

In accordance with embodiments, the communication device is configured with at least a Doppler-frequency codebook and a Doppler-frequency configuration. The Doppler-frequency configuration comprises one or more parameters indicating the number of Doppler-frequency components used for all transmission layers, or per transmission layer, or per subset of transmission layers of the precoder matrix. In one embodiment, the number of Doppler-frequency components is identical for all transmission layers, i.e., $F_{r,i,d} = F$, or $F_{r,d} = F$ and the Doppler-frequency configuration comprising only a single parameter ($F$) for the configuration of the number of Doppler-frequency components of the precoder matrix. In another embodiment, the number of Doppler-frequency components is identical for a subset of transmission layers, and the Doppler-frequency configuration comprising only one parameter ($F_r$) for the subset of transmission layers of the precoder matrix.

In accordance with embodiments, the Doppler-frequency configuration may be signaled via a higher layer (e.g., RRC or MAC-CE), or via a physical layer (e.g., DCI), or the Doppler-frequency configuration may be a priori known at the communication device. If the Doppler-frequency configuration is signaled to the communication device, the Doppler-frequency configuration may be contained in the TPMI (first or second TPMI).

If the communication device is configured with a delay codebook and/or beam/port-selection codebook, then the Doppler-frequency configuration may comprise one or more parameters indicating the number of Doppler-frequency components per delay and/or beam and layer.

In accordance with embodiments, the communication device is configured with at least a Doppler-frequency codebook and a Doppler-frequency configuration comprising one or more Doppler-frequency basis indicator(s) indicating the Doppler-frequency vectors used for the transmission layers and/or beams (if configured) and/or delays per beam (if configured) and layer of the precoder matrix.

A Doppler-frequency basis indicator(s) indicating the selected Doppler-frequency vectors for the precoder may be represented by bitmap(s) and/or by bit-indicator(s).

Moreover, the Doppler-frequency configuration may contain common Doppler-frequency basis indicator(s) indicating the Doppler-frequency vectors for a layer (or a set of layers, a delay, or set of delays, beam, or set of beams) and one or more individual Doppler-frequency basis indicator(s) indicating the selected Doppler-frequency vectors for a delay and/or beam for a layer from a common Doppler-frequency basis indicator. The one or more Doppler-frequency basis indicator(s) indicating the Doppler-frequency vectors may be represented by bitmap(s) and/or by bit-indicator(s).

A Doppler-frequency basis subset indicator may be associated with a transmission layer and beam (if configured) and/or delay (if configured) and may be identical for subsets of transmission layers and/or subset of beams and/or subset of delays.

In the following, embodiments for the Doppler-frequency basis subset indicator are presented.

A Doppler-frequency basis subset indicator may indicate a set of Doppler-frequency vectors selected from the Doppler-frequency codebook, or it may indicate a set of Doppler-frequency vectors selected from another Doppler-frequency basis indicator.

In one embodiment, a first Doppler-frequency basis subset indicator may indicate the Doppler-frequency vectors for all layers of the precoder matrix selected from the Doppler-frequency codebook, and a second Doppler-frequency basis subset indicator may indicate the Doppler-frequency vectors for a layer selected from the first Doppler-frequency basis subset indicator.

In another embodiment, assuming a communication device is configured with a Doppler-frequency codebook and a beam/port-selection codebook, a first Doppler-frequency basis subset indicator may indicate the Doppler-frequency vectors for a layer of the precoder matrix selected from the Doppler-frequency codebook and a second Doppler-frequency basis subset indicator may indicate the Doppler-frequency vectors for a beam of that layer of the precoder matrix selected from the first Doppler-frequency basis subset indicator.

In another embodiment, assuming a communication device is configured with a Doppler-frequency codebook and a delay codebook, a first Doppler-frequency basis subset indicator may indicate the Doppler-frequency vectors for a layer of the precoder matrix selected from the Doppler-frequency codebook and a second Doppler-frequency basis subset indicator may indicate the Doppler-frequency vectors for a delay of that layer of the precoder matrix selected from the first Doppler-frequency basis subset indicator.

In another embodiment, assuming a communication device is configured with a Doppler-frequency codebook, a delay codebook and a beam/port-selection codebook, a first Doppler-frequency basis subset indicator may indicate the Doppler-frequency vectors for a layer of the precoder matrix selected from the Doppler-frequency codebook and a second Doppler-frequency basis subset indicator may indicate the Doppler-frequency vectors for a delay and beam of that layer of the precoder matrix selected from the first Doppler-frequency basis subset indicator.

In accordance with embodiments, a Doppler-frequency basis subset indicator may be represented by a bitmap indicating the selected Doppler-frequency vectors used for the precoding matrix. Each bit in the bitmap may be associated with a Doppler-frequency vector of the codebook, or a Doppler-frequency vector from another Doppler-frequency basis indicator. For example, a "1" in the bitmap may indicate that the associated Doppler-frequency vector is selected, and a "0" may indicate that the associated Doppler-frequency vector is not selected.

In accordance with embodiments, a Doppler-frequency basis subset indicator may be represented by a combinatorial indicator, i.e., $\binom{A}{B}$ indicating $B$ selected Doppler-frequency vectors out of $A$ Doppler-frequency vectors, wherein the $A$ Doppler-frequency vectors are either associated with the Doppler-frequency vectors from the Doppler-frequency codebook, or with the Doppler-frequency from another Doppler-frequency basis subset indicator.

The signaling of the Doppler-frequency basis indicator(s) indicating the Doppler-frequency vectors for the precoder matrix increases the signaling overhead. In the following, several schemes are presented that reduce the signaling overhead.

In accordance with embodiments, the communication device is configured with at least a Doppler-frequency codebook and with a Doppler-frequency configuration, where the Doppler-frequency indices ($m$) per layer and/or beam (if configured) and/or delay (if configured) indicated by a Doppler-frequency indicator are within a pre-defined window:

$$m = mod(\tilde{M}_0 + n, N_4), \; 0 \leq n \leq C - 1,$$

where $C$ denotes the window size, and $mod(a,b)$ denotes the modulo operation with respect to $b$. The position ($\tilde{M}_0$) of the window is either known (e.g., $\tilde{M}_0 = 0$) at the communication device and does not need to be signaled by the base station or any other network entity, or it is configured by the base station or any other network entity. In addition, if the indicated Doppler frequency vectors per delay and/or beam (for a layer) may be configured to be identical, a Doppler-frequency configuration may not be signaled to the communication device.

The window-size parameter ($C$) may be identical or different for the different layers, beams and/or delays (if configured), and is either a priori known at the communication device, or configured via a higher layer (e.g., RRC or MAC-CE), or indicated via a physical layer.

The one or more Doppler-frequency basis indicator(s) indicating the Doppler-frequency vectors based on the pre-defined window may be represented by bitmap(s) and/or by bit-indicator(s).

**Signaling schemes for TPMI indication**

The following embodiments describe signaling schemes for the TPMI, containing the combining coefficients of the precoder, to the communication device. The TPMI may also contain information on the selected vectors (i.e., the basis subset indicators) from the one or more codebooks of the precoder matrix, the transmission rank of the precoder matrix, and the one or more parameters indicating the configuration of the beam, delay and/or Doppler-frequency components (if not configured via RRC signaling) of the precoder matrix.

In accordance with embodiments, the communication device is configured to receive the TPMI via a physical layer, wherein the TPMI is contained in a single DCI.

The most flexible way of signaling the precoder configuration to the communication device is to include the TPMI in a single DCI. This may not only results in a large TPMI payload size (and hence control overhead) for a large number of combining coefficients of the precoder, it may also result in downlink coverage problems of the control channel and a significant increase of UE blind detection complexity due to the large number of bits in the single DCI. Consequently, to reduce the payload size of the DCI, in accordance with embodiments, the TPMI is decomposed into two parts (first and second TPMI) which may be signaled either using two DCIs, or a single DCI for the first TPMI and a separate DL channel allocation (PDSCH) for the second TPMI.

In accordance with embodiments, the communication device is configured to receive a TPMI from the base station or any other network entity, wherein the TPMI contains a first and second TPMI. The first TPMI contains at least one of the following:

- an indication of the selected beam/port components (if configured) of the precoder matrix,
- the transmission rank of the precoder matrix,
- the one or more parameters indicating the delay configuration (if configured and not indicated via RRC signaling) of the precoder matrix,
- the one or more parameters of the Doppler-frequency configuration (if configured and not indicated via RRC signaling) of the precoder matrix,
- the basis subset indicators for the delay components (if configured) of the precoder matrix,
- the basis subset indicators for the Doppler-frequency components (if configured) of the precoder matrix,
- an indication of the number of combining coefficients, and

the second TPMI contains at least one of the following:

- the basis subset indicators for the delay components (if configured and not contained in the first TPMI) of the precoder matrix,
- the basis subset indicators for the Doppler-frequency components (if configured and not contained in the first TPMI) of the precoder matrix, and
- an indication of the selected combining coefficients for the precoder matrix.

In accordance with embodiments, the communication device is configured to receive the first TPMI via a single first DCI. The first TPMI contains at least the information on the selected beams/ports (vectors **b**) used by the precoder. Moreover, the first DCI may contain an indication field used to indicate the existence of a second DCI containing the second TPMI, or the existence of the second DCI may be indicated via a higher layer (e.g., RRC signaling). For example, an RRC parameter configured by the base station or any other network entity may indicate if a second DCI exists or not. In another alternative, the second DCI is always present and hence the existence of a second DCI is not indicated via a physical or a higher layer.

In accordance with embodiments, the communication device is configured to receive the first TPMI via a single DCI. The first TPMI contains at least the information on the selected beams/ports (vectors **b**) used by the precoder. Moreover, the first DCI may contain an indication field used to indicate the existence of a second DCI containing a DL scheduling assignment (DCI associated with a PDSCH) used to indicate the second TPMI.

## Indication of combining coefficients

In accordance with embodiments, the communication device is configured with a combining-coefficient configuration, and the combining-coefficient configuration may contain at least one of the following:

- an indication of the number of combining-coefficients,
- an indication of the number of combining-coefficients per layer,

In accordance with embodiments, the combining-coefficient configuration is signaled by a base station or any other network entity via a higher layer (e.g., RRC or MAC-CE) or via a physical layer, or the combining-coefficient configuration is known at the communication device.

In accordance with embodiments, the combining coefficients $\gamma$ (without indexation for simplicity) indicated to the communication device are selected from a codebook and may be represented by one of the following schemes:

(1) $\gamma = a\varphi$, where

- $a$ represents a real-valued amplitude, quantized with $N_a$ bits, and
- $\varphi = \exp(-j2\pi c)$ is a phase which is represented by a BPSK, or QPSK, or 8PSK, or any higher-order constellation, or

(2) $\gamma = \varphi$, where

- $\varphi = \exp(-j2\pi c)$ is a phase which is represented by a BPSK, or QPSK, or 8PSK, or any higher-order constellation, or

(3) $\gamma = Re\{\gamma\} + jImag\{\gamma\}$, where

- $Re\{\gamma\}$ and $Imag\{\gamma\}$ represent the real and imaginary part of $\gamma$, and are quantized with $N_r$ and $N_i$ bits, respectively, or

(4) $\gamma = a$, where

- $a$ represents a real-valued amplitude, selected from $\{0,1\}$, or from $\{0, +1, -1, -j, +j\}$, or

(5) $\gamma = ab\varphi$, where

- $a$ represents a real-valued differential amplitude, quantized with $N_a$ bits, and
- $b$ represents a common amplitude over a subset of combining coefficients (e.g., a subset of combining coefficients with respect to subset of beams and/or subset of delays and/or subset of Doppler-frequencies and/or a polarization), quantized with $N_b$ bits, where $N_a \leq N_b$, and
- $\varphi = \exp(-j2\pi c)$ is a phase which is represented by a BPSK, or QPSK, or 8PSK, or any higher-order constellation, or

(6) $\gamma = abc\varphi$, where

- $a$ represents a real-valued differential amplitude, quantized with $N_a$ bits, and
- $b$ represents a first common amplitude over a first subset of combining coefficients (e.g., subset of combining coefficients with respect to subset of beams and/or subset of delays and/or subset of Doppler-frequencies and/or a polarization), quantized with $N_b$ bits, where $N_a \leq N_b$,
- $c$ represents a second common amplitude over a second subset of combining coefficients (e.g., subset of combining coefficients with respect to subset of beams and/or subset of delays and/or subset of Doppler-frequencies and/or a polarization), quantized with $N_c$ bits, where $N_a \leq N_c$, and
- $\varphi = \exp(-j2\pi c)$ is a phase which is represented by a BPSK, or QPSK, or 8PSK, or any higher-order constellation.

(7) $\gamma = abcd\varphi$, where

- $a$ represents a real-valued differential amplitude, quantized with $N_a$ bits, and
- $b$ represents a first common amplitude over a first subset of combining coefficients (e.g., subset of combining coefficients with respect to subset of beams and/or subset of delays and/or subset of Doppler-frequencies and/or a polarization), quantized with $N_b$ bits, where $N_a \leq N_b$,
- $c$ represents a second common amplitude over a second subset of combining coefficients (e.g., subset of combining coefficients with respect to subset of beams and/or subset of delays and/or subset of Doppler-frequencies and/or a polarization), quantized with $N_c$ bits, where $N_a \leq N_c$, and
- $d$ represents a third common amplitude over a third subset of combining coefficients (e.g., subset of combining coefficients with respect to subset of beams and/or subset of delays and/or subset of Doppler-frequencies and/or a polarization), quantized with $N_{d_\gamma}$ bits, where $N_a \leq N_d$, and
- $\varphi = \exp(-j2\pi c)$ is a phase which is represented by a BPSK, or QPSK, or 8PSK, or any higher-order constellation.

## Coefficient normalization and strongest coefficient indication

In accordance with embodiments, the combining coefficients $\gamma$ (without index for simplicity) are normalized per layer with respect to a strongest combining coefficient such that the amplitude of the strongest normalized combining coefficient is 1 (or any other reference value).

In accordance with embodiments, the amplitude and phase of the strongest combining coefficient may not be indicated to the communication device. The position of the strongest combining coefficient (i.e., the indices associated with the beam and/or delay and/or Doppler-frequency components) may be either a priori known at the communication device, or indicated via a strongest coefficient (position) indicator (per layer) to the communication device.

In accordance with embodiments, the combining coefficients $\gamma$ are contained in the TPMI (or second TPMI) and indicated to the communication device via a physical layer control channel (PDCCH), or a physical layer data shared channel (PDSCH).

## General

In accordance with embodiments, the wireless communication system may include a terrestrial network, or a non-terrestrial network, or networks or segments of networks using as a receiver an airborne vehicle or a spaceborne vehicle, or a combination thereof.

In accordance with embodiments, the UE may comprise one or more of a mobile or stationary terminal, an IoT device, a ground based vehicle, an aerial vehicle, a drone, a building, or any other item or device provided with network connectivity enabling the item/device to communicate using the wireless communication system, like a sensor or actuator.

In accordance with embodiments, the base station may comprise one or more of a macro cell base station, or a small cell base station, or a spaceborne vehicle, like a satellite or a space, or an airborne vehicle, like a unmanned aircraft system (UAS), e.g., a tethered UAS, a lighter than air UAS (LTA), a heavier than air UAS (HTA) and a high altitude UAS platforms (HAPs), or any transmission/reception point (TRP) enabling an item or a device provided with network connectivity to communicate using the wireless communication system.

The embodiments of the present invention have been described above with reference to a communication system employing a rank 1 or layer 1 communication. However, the present invention is not limited to such embodiments and may also be implemented in a communication system employing a higher rank or layer communication. In such embodiments, the feedback includes the delays per layer and the complex precoder coefficients per layer.

With regard to the above-described embodiments of the various aspects of the present invention, it is noted that they have been described in an environment in which a communication is between a transmitter, like a gNB or a UE, and a receiver, like a UE and a gNB. However, the invention is not limited to such a communication, rather, the above-described principles may equally be applied for a device-to-device communication, like a D2D, V2V, V2X communication. In such scenarios, the communication is over a sidelink between the respective devices. The transmitter is a first UE and the receiver is a second UE communicating using the sidelink resources.

The embodiments of the present invention have been described above with reference to a communication system in which the transmitter is a base station serving a user equipment, and the communication device or receiver is the user equipment served by the base station. However, the invention is not limited to such a communication, rather, the above-described principles may equally be applied for a device-to-device communication, like a D2D, V2V, V2X communication. In such scenarios, the communication is over a sidelink between the respective devices. The transmitter is a first UE and the receiver is a second UE communicating using the sidelink resources. Thus, the present invention is not limited to uplink precoding between a UE and a base station, but is equally applicable to, e.g., sidelink-based precoding for UE to UE communications.

Although some aspects of the described concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

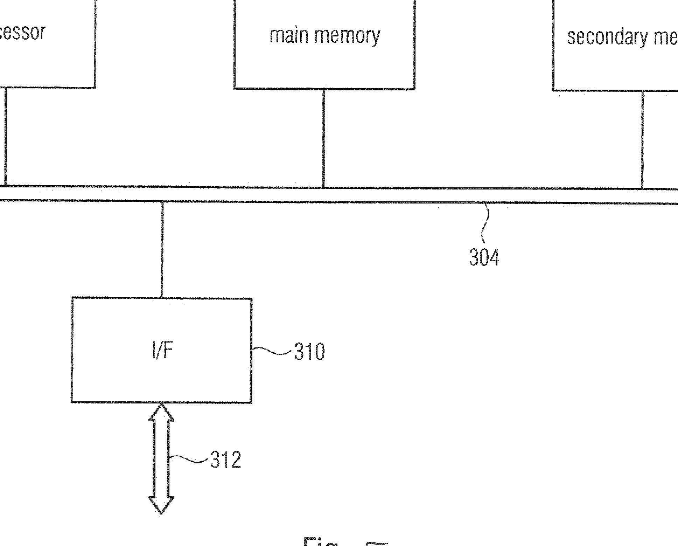

Various elements and features of the present invention may be implemented in hardware using analog and/or digital circuits, in software, through the execution of instructions by one or more general purpose or special-purpose processors, or as a combination of hardware and software. For example, embodiments of the present invention may be implemented in the environment of a computer system or another processing system. Fig. 5 illustrates an example of a computer system 350. The units or modules as well as the steps of the methods performed by these units may execute on one or more computer systems 350. The computer system 350 includes one or more processors 352, like a special purpose or a general purpose digital signal processor. The processor 352 is connected to a communication infrastructure 354, like a bus or a network. The computer system 350 includes a main memory 356, e.g., a random access memory (RAM), and a secondary memory 358, e.g., a hard disk drive and/or a removable storage drive. The secondary memory 358 may allow computer programs or other instructions to be loaded into the computer system 350. The computer system 350 may further include a communications interface 360 to allow software and data to be transferred between computer system 350 and external devices. The communication may be in the from electronic, electromagnetic, optical, or other signals capable of being handled by a communications interface. The communication may use a wire or a cable, fiber optics, a phone line, a cellular phone link, an RF link and other communications channels 362.

The terms "computer program medium" and "computer readable medium" are used to generally refer to tangible storage media such as removable storage units or a hard disk installed in a hard disk drive. These computer program products are means for providing software to the computer system 350. The computer programs, also referred to as computer control logic, are stored in main memory 356 and/or secondary memory 358. Computer programs may also be received via the communications interface 360. The computer program, when executed, enables the computer system 350 to implement the present invention. In particular, the computer program, when executed, enables processor 352 to implement the processes of the present invention, such as any of the methods described herein. Accordingly, such a computer program may represent a controller of the computer system 350. Where the disclosure is implemented using software, the software may be stored in a computer program product and loaded into computer system 350 using a removable storage drive, an interface, like communications interface 360.

The implementation in hardware or in software may be performed using a digital storage medium, for example cloud storage, a floppy disk, a DVD, a Blue-Ray, a CD, a ROM, a PROM, an EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention may be implemented as a computer program product with a program code, the program code being operative for performing one of the methods when the computer program product runs on a computer. The program code may for example be stored on a machine readable carrier.

Other embodiments comprise the computer program for performing one of the methods described herein, stored on a machine readable carrier. In other words, an embodiment of the inventive method is, therefore, a computer program having a program code for performing one of the methods described herein, when the computer program runs on a computer.

A further embodiment of the inventive methods is, therefore, a data carrier (or a digital storage medium, or a computer-readable medium) comprising, recorded thereon, the computer program for performing one of the methods described herein. A further embodiment of the inventive method is, therefore, a data stream or a sequence of signals representing the computer program for performing one of the methods described herein. The data stream or the sequence of signals may for example be configured to be transferred via a data communication connection, for example via the Internet. A further embodiment comprises a processing means, for example a computer, or a programmable logic device, configured to or adapted to perform one of the methods described herein. A further embodiment comprises a computer having installed thereon the computer program for performing one of the methods described herein.

In some embodiments, a programmable logic device (for example a field programmable gate array) may be used to perform some or all of the functionalities of the methods described herein. In some embodiments, a field programmable gate array may cooperate with a microprocessor in order to perform one of the methods described herein. Generally, the methods are preferably performed by any hardware apparatus.

The above described embodiments are merely illustrative for the principles of the present invention. It is understood that modifications and variations of the arrangements and the details described herein are apparent to others skilled in the art. It is the intent, therefore, to be limited only by the scope of the impending patent claims and not by the specific details presented by way of description and explanation of the embodiments herein.

### References:

[1] "NR - Physical channels and modulation, V15.2.0," 3GPP, Sophia Antipolis, TS 38.211, July 2018.
[2] "NR - Physical layer procedures for data, V15.3.0," 3GPP, Sophia Antipolis, TS 38.214, Oct. 2018.

### Claims

1.  A communication device for performing in a wireless communication system a transmission to a network entity, like a base station or another communication device of the wireless communication system,
    wherein the communication device is to receive from the network entity of the wireless communication system a precoding matrix indicator indicating a precoder matrix for one or more transmission layers and transmission resources, like time domain resources and/or frequency-domain resources, of a transmission channel (PUSCH, PSSCH) to the network entity,
    wherein the communication device includes a precoder, wherein the precoder is to precode, responsive to the received precoding matrix indicator, time domain resources and/or frequency-domain resources of the transmission channel (PUSCH, PSSCH) to the network entity over one or more ports of the communication device,
    wherein the communication device is to perform the transmission to the network entity using the precoded time domain resources and/or frequency-domain resources of the transmission channel (PUSCH, PSSCH) over the one or more ports, and
    wherein the precoder is based on one or more codebooks and a plurality of combining coefficients for complex combining components from the one or more codebooks, the one or more codebooks including one or more of:

    • a spatial codebook comprising one or more spatial beam or port selection components of the precoder, and/or
    • a delay codebook comprising one or more delay components of the precoder, and/or
    • a Doppler-frequency codebook comprising one or more Doppler-frequency components of the precoder.

2.  The communication device of claim 1, wherein the precoder matrix includes a single codebook, the single codebook comprising either one or more delay components or one or more Doppler-frequency components of the precoder, and wherein the plurality of combining coefficients are for complex combining the selected components from the single codebook.

3.  The communication device of claim 1, wherein the precoder matrix includes two codebooks, a first codebook and a second codebook, wherein the plurality of combining coefficients are for complex combining the selected components from the two codebooks,

wherein the first codebook comprises one or more spatial beam or port selection components of the precoder, and the second codebook comprises one or more delay components of the precoder or one or more Doppler-frequency components of the precoder.

4. The communication device of claim 1, wherein the precoder matrix includes two codebooks, a first codebook and a second codebook, wherein the plurality of combining coefficients are for complex combining the selected components from the two codebooks,

wherein the first codebook comprises one or more one or more delay components of the precoder, and the second codebook comprises one or more Doppler-frequency components of the precoder.

5. The communication device of claim 1, wherein the precoder matrix includes three codebooks, a first codebook, a second codebook and a third codebook, wherein the plurality of combining coefficients are for complex combining the selected components from the three codebooks,

wherein the first codebook comprises one or more spatial beam or port-selection components of the precoder, the second codebook comprises one or more delay components of the precoder, and the third codebook comprises one or more Doppler-frequency components of the precoder.

6. The communication device of any one of the preceding claims, wherein the precoding matrix indicator (TPMI) is decomposed into two parts, a first precoding matrix indicator and a second precoding matrix indicator, and the communication device is to receive the first precoding matrix indicator in a first control information message (DCI, SCI) in a control channel (PDCCH, PSCCH) and the second precoding matrix indicator in a second control information message (DCI, SCI) in the control channel (PDCCH, PSCCH).

7. The communication device of claim 6, wherein the first control information message (DCI, SCI) includes an indication field indicating the existence of a second control information message (DCI, SCI) including the second precoding matrix indicator, or wherein the existence of the second control information message (DCI, SCI) is indicated via a higher layer, e.g., RRC.

8. The communication device of any one of the preceding claims, wherein the precoding matrix indicator (TPMI) is decomposed into two parts, a first precoding matrix indicator and a second precoding matrix indicator, and the communication device is to receive the first precoding matrix indicator in a control information message (DCIs, SCIs) in a control channel (PDCCH, PSCCH) and the second precoding matrix indicator as payload in a data channel (PDSCH, PSSCH).

9. The communication device of claim 8, wherein the first control information message (DCI, SCI) includes an indication field indicating the existence of a second control information message (DCI, SCI) including a scheduling assignment for indicating the second precoding matrix indicator.

10. The communication device of any one of claims 6 to 9, wherein the first precoding matrix indicator includes one or more of the following:

  • an indication of the selected beam or port components of the precoder matrix,
  • a transmission rank of the precoder matrix,
  • one or more parameters indicating the delay configuration of the precoder matrix,
  • one or more parameters of the Doppler-frequency configuration of the precoder matrix,
  • one or more basis subset indicators for the delay components of the precoder matrix,
  • one or more basis subset indicators for the Doppler-frequency components of the precoder matrix,
  • an indication of the number of combining coefficients, and

wherein the second precoding matrix indicator includes one or more of the following:

  • one or more basis subset indicators for the delay components of the precoder matrix, if not contained in the first precoding matrix indicator
  • one or more the basis subset indicators for the Doppler-frequency components of the precoder matrix, if not contained in the first precoding matrix indicator, and
  • an indication of selected combining coefficients for the precoder matrix.

11. The communication device of any one of the preceding claims, wherein the precoding matrix indicator includes one or more basis subset indicators for the respective codebook components, e.g.,

> • one or more delay basis subset indicators indicating the delay vectors, selected from the delay codebook or from another delay basis subset indicator, of the precoder matrix, and/or
> • one or more Doppler-frequency basis subset indicators indicating the Doppler-frequency vectors, selected from the Doppler-frequency codebook or from another Doppler-frequency basis subset indicator, of the precoder matrix.

12. The communication device of any one of the preceding claims, wherein the indices associated with the vectors indicated in a basis subset indicator are within a pre-defined window.

13. A network entity, like a base station or a communication device, for performing in a wireless communication system a transmission to a communication device of the wireless communication system,
wherein the network entity is to transmit to the network entity of the wireless communication system a precoding matrix indicator indicating a precoder matrix for one or more transmission layers and transmission resources, like time domain resources and/or frequency-domain resources, of a transmission channel (PUSCH, PSSCH) from the network entity to the communication device,
wherein the network entity is to decompose the precoding matrix indicator (TPMI) into two parts, a first precoding matrix indicator and a second precoding matrix indicator, and
wherein the network entity is to

> • transmit the first precoding matrix indicator in a first control information message (DCI, SCI) in a control channel (PDCCH, PSCCH) and the second precoding matrix indicator in a second control information message (DCI, SCI) in the control channel (PDCCH, PSCCH), or
> • transmit the first precoding matrix indicator in a control information message (DCIs, SCIs) in a control channel (PDCCH, PSCCH) and the second precoding matrix indicator as payload in a data channel (PDSCH, PSSCH).

14. The communication device or network entity of any one of the preceding claims, wherein
the communication device comprises one or more of a mobile terminal, or stationary terminal, or cellular IoT-UE, or an IoT device, or a ground based vehicle, or an aerial vehicle, or a drone, or a moving base station, or road side unit, or a building, or a macro cell base station, or a small cell base station, or a road side unit, or a UE, or a remote radio head, or an AMF, or an SMF, or a core network entity, or a network slice as in the NR or 5G core context, or any transmission/reception point (TRP) enabling an item or a device to communicate using the wireless communication network, the item or device being provided with network connectivity to communicate using the wireless communication network, and
the network entity comprises a base station including one or more of a macro cell base station, or a small cell base station, or a central unit of a base station, or a distributed unit of a base station, or a road side unit, or a UE, or a remote radio head, or an AMF, or an SMF, or a core network entity, or a network slice as in the NR or 5G core context, or any transmission/reception point, TRP, enabling an item or a device to communicate using the wireless communication network, the item or device being provided with network connectivity to communicate using the wireless communication network.

15. A wireless communication network, comprising one or more communication devices or one or more network entities of any one of the preceding claims.

16. A method for performing in a wireless communication system a transmission to a network entity, like a base station or another communication device of the wireless communication system, the method comprising:

> receiving, at a communication device, from the network entity of the wireless communication system a precoding matrix indicator indicating a precoder matrix for one or more transmission layers and transmission resources, like time domain resources and/or frequency-domain resources, of a transmission channel (PUSCH, PSSCH) to the network entity,
> responsive to the received precoding matrix indicator, precoding, using a precoder of the communication device includes time domain resources and/or frequency-domain resources of a transmission channel (PUSCH, PSSCH) to the network entity over one or more ports in the wireless communication system, and
> transmitting, by the communication device, using the precoded time domain resources and/or frequency-domain resources of the transmission channel (PUSCH, PSSCH) over the one or more ports,

wherein the precoder is based on one or more codebooks and a plurality of combining coefficients for complex combining components from the one or more codebooks, the one or more codebooks including one or more of:

- a spatial codebook comprising one or more spatial beam or port selection components of the precoder, and/or
- a delay codebook comprising one or more delay components of the precoder, and/or
- a Doppler-frequency codebook comprising one or more Doppler-frequency components of the precoder.

17. A method for performing in a wireless communication system a transmission from a network entity, like a base station or a communication device, to a communication device of the wireless communication system, the method comprising:

transmitting, by the network entity, to the communication device of the wireless communication system a precoding matrix indicator indicating a precoder matrix for one or more transmission layers and transmission resources, like time domain resources and/or frequency-domain resources, of a transmission channel (PUSCH, PSSCH) from the network entity to the communication device,
decomposing, by the network entity, the precoding matrix indicator (TPMI) into two parts, a first precoding matrix indicator and a second precoding matrix indicator,
transmitting the first precoding matrix indicator in a first control information message (DCI, SCI) in a control channel (PDCCH, PSCCH) and the second precoding matrix indicator in a second control information message (DCI, SCI) in the control channel (PDCCH, PSCCH), or
transmitting the first precoding matrix indicator in a control information message (DCIs, SCIs) in a control channel (PDCCH, PSCCH) and the second precoding matrix indicator as payload in a data channel (PDSCH, PSSCH).

18. A non-transitory computer program product comprising a computer readable medium storing instructions which, when executed on a computer, perform the method of claim 16 or 17.

Fig. 1

202

214

received vector $y \in \mathbb{C}^{N_{Rx} \times 1}$

user equipment

$ANT_R$

204

212

channel matrix $H \in \mathbb{C}^{N_{Tx} \times N_S}$

CSI: CQI, PMI, RI

216

$ANT_T$

200

206

precoder $F \in \mathbb{C}^{N_{Tx} \times N_S}$

$F \in \Omega$

codebook set $\Omega$

210

eNodeB

208

data vector $s \in \mathbb{C}^{N_S \times 1}$

Fig. 3

250

258      256      ANT$_T$      254      262      ANT$_R$      252      264

| data vector $s \in \mathbb{C}^{N_S \times 1}$ | → | precoder $W$ | → | channel matrix $H \in \mathbb{C}^{N_{Tx} \times N_S}$ | → | received vector $y \in \mathbb{C}^{N_{Rx} \times 1}$ |

$W \in \Omega$

260      codebook set $\Omega$

gNB

TPMI

264

UE

EP 3 780 411 A1

:cessor

main memory

secondary me

304

I/F 〜310

〜312

Fig. 5

Europäisches
Patentamt

European
Patent Office

Office européen
des brevets

## EUROPEAN SEARCH REPORT

Application Number

EP 19 19 1849

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2017/311296 A1 (ONGGOSANUSI EKO [US] ET AL) 26 October 2017 (2017-10-26) | 1-3,11, 12,15, 16,18 | INV. H04B7/0456 H04B7/06 |
| A | * Equations 1,3,4,; paragraphs [0103], [0133], [0151], [0152], [0157], [0169], [0170], [0178] - [0180], [0192]; figures 5, 9; tables 1A, 1B * | 4,5 | |
| X | US 2011/090882 A1 (LEE WOOK BONG [KR] ET AL) 21 April 2011 (2011-04-21) | 1,15,16, 18 | |
| A | * equation 11; paragraphs [0020], [0021], [0039], [0061], [0067], [0071], [0077], [0078] * | 4,5 | |
| X | WO 2018/174636 A2 (LG ELECTRONICS INC [KR]) 27 September 2018 (2018-09-27) | 1,15,16, 18 | |
| A | * page . * & EP 3 605 868 A2 (LG ELECTRONICS INC [KR]) 5 February 2020 (2020-02-05) * Equations 15, 45; paragraphs [0262] - [0267], [0374], [0376], [0377]; claim 1 * | 4,5 | |

TECHNICAL FIELDS
SEARCHED (IPC)

H04B
H04L

~~The present search report has been drawn up for all claims~~

| Place of search | Date of completion of the search | Examiner |
|---|---|---|
| Munich | 13 February 2020 | Panahandeh, Ali |

EPO FORM 1503 03.82 (P04C01)

| Europäisches Patentamt<br>European Patent Office<br>Office européen des brevets | Application Number<br>EP 19 19 1849 |
|---|---|

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

1-5, 11, 12, 16(completely); 15, 18(partially)

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 19 19 1849

The Search Division considers that the present European patent application does not comply with the requirements of unity of invention and relates to several inventions or groups of inventions, namely:

1. claims: 1-5, 11, 12, 16(completely); 15, 18(partially)

- Independent claim 1 refers to:
A communication device for performing in a wireless communication system a transmission to a network entity, like a base station or another communication device of the wireless communication system,wherein the communication device is to receive from the network entity of the wireless communication system a precoding matrix indicator indicating a precoder matrix for one or more transmission layers and transmission resources, like time domain resources and/or frequency-domain resources, of a transmission channel (PUSCH, PSSCH) to the network entity,wherein the communication device includes a precoder, wherein the precoder is to precode, responsive to the received precoding matrix indicator, time domain resources and/or frequency-domain resources of the transmission channel (PUSCH, PSSCH) to the network entity over one or more ports of the communication device,wherein the communication device is to perform the transmission to the network entity using the precoded time domain resources and/or frequency-domain resources of the transmission channel (PUSCH, PSSCH) over the one or more ports, andwherein the precoder is based on one or more codebooks and a plurality of combining coefficients for complex combining components from the one or more codebooks, the one or more codebooks including one or more of:? a spatial codebook comprising one or more spatial beam or port selection components of the precoder, and/or? a delay codebook comprising one or more delay components of the precoder, and/or? a Doppler-frequency codebook comprising one or more Doppler-frequency components of the precoder.
- Independent claim 16 is the corresponding method
- Independent claim 18 is the corresponding non transitory computer program product

---

2. claims: 6-10, 13, 14, 17(completely); 15, 18(partially)

- Independent claim 13 refers to:
A network entity, like a base station or a communication device, for performing in a wireless communication system a transmission to a communication device of the wireless communication system,wherein the network entity is to transmit to the network entity of the wireless communication system a precoding matrix indicator indicating a precoder matrix for one or more transmission layers and transmission resources, like time domain resources and/or frequency-domain resources, of a transmission channel (PUSCH, PSSCH) from the network entity to the communication device,wherein the network entity is to decompose the

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

precoding matrix indicator (TPMI) into two parts, a first precoding matrix indicator and a second precoding matrix indicator, andwherein the network entity is to? transmit the first precoding matrix indicator in a first control information message (DCI, SCI) in a control channel (PDCCH, PSCCH) and the second precoding matrix indicator in a second control information message (DCI, SCI) in the control channel (PDCCH, PSCCH), or? transmit the first precoding matrix indicator in a control information message (DCIs, SCIs) in a control channel (PDCCH, PSCCH) and the second precoding matrix indicator as payload in a data channel (PDSCH, PSSCH).
- Independent claim 17 is the corresponding method
- Independent claim 18 is the corresponding non transitory computer program product
---

## ANNEX TO THE EUROPEAN SEARCH REPORT
## ON EUROPEAN PATENT APPLICATION NO.

EP 19 19 1849

This annex lists the patent family members relating to the patent documents cited in the above-mentioned European search report.
The members are as contained in the European Patent Office EDP file on
The European Patent Office is in no way liable for these particulars which are merely given for the purpose of information.

13-02-2020

| Patent document cited in search report | | Publication date | Patent family member(s) | | Publication date |
|---|---|---|---|---|---|
| US 2017311296 | A1 | 26-10-2017 | US 2017311296 A1 | | 26-10-2017 |
| | | | US 2020014434 A1 | | 09-01-2020 |
| | | | US 2020052747 A1 | | 13-02-2020 |
| US 2011090882 | A1 | 21-04-2011 | US 2011090882 A1 | | 21-04-2011 |
| | | | WO 2011049295 A2 | | 28-04-2011 |
| WO 2018174636 | A2 | 27-09-2018 | CN 110832789 A | | 21-02-2020 |
| | | | EP 3605868 A2 | | 05-02-2020 |
| | | | JP 2020511899 A | | 16-04-2020 |
| | | | KR 20190120372 A | | 23-10-2019 |
| | | | US 2020083938 A1 | | 12-03-2020 |
| | | | WO 2018174636 A2 | | 27-09-2018 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- NR - Physical channels and modulation, V15.2.0. TS 38.211. 3GPP, July 2018

- NR - Physical layer procedures for data, V15.3.0. TS 38.214. 3GPP, October 2018